# EUROPEAN PATENT APPLICATION

(11) **EP 3 970 853 A1**
(43) Date of publication of application: **23.03.2022**
(21) Application number: 20805890.9
(22) Date of filing: 30.04.2020
(51) Int. Cl.: B01J 29/85, B01D 53/94, B01J 29/80, B01J 35/04, B01J 37/04

(54) **CATALYST, CATALYST PRODUCT AND CATALYST PRODUCTION METHOD**

(30) Priority: 15.05.2019 JP 2019092173
(71) Applicant: ACR Co., Ltd., Yamato-shi, Kanagawa (JP)
(72) Inventor: KITAMURA, Takeaki, Yamato-shi, Kanagawa 243-0303 (JP)
(74) Representative: Loyer & Abello
(86) International application number: PCT/JP2020/018211
(87) International publication number: WO 2020/230639

(57) **Abstract**

For NOx-purification of an SCR exhaust gas post-treatment system, no SCR catalyst existed which has a low temperature activity at an exhaust gas temperature of 200 °C to 350 °C and a high temperature activity at an exhaust gas temperature of 350 °C to 500 °C, wherein both of the activities are high in a balanced manner. The present invention provides an SCR catalyst which has a low temperature activity at an exhaust gas temperature of 200 °C to 350 °C and a high temperature activity at an exhaust gas temperature of 350 °C to 500 °C, wherein both of the activities are high in a balanced manner, wherein the SCR catalyst further enables the high activities to be maintained even after aging with hot water. The SCR catalyst contains a phosphorus oxide of about 15 to about 35% by mass, wherein a molar proportion of silica to alumina is from about 1.9 to about 5.2, and wherein the catalyst further includes a copper-introduced zeolite with an atomic proportion of copper to aluminum of about 0.05 to about 0.1.

## Description

### BACKGROUND OF THE INVENTION

### Technical Field

Embodiments of the present invention relate to a zeolite having a crystal structure of CHA, AEI and/or AFX and containing a phosphorus oxide, a method for producing the same, and a catalyst containing such a copper zeolite.

More particularly, embodiments of the present invention relate to a catalyst of a CuCHA zeolite containing a phosphorus oxide, a CuAEI zeolite containing a phosphorus oxide and/or CuAFX zeolite containing a phosphorus oxide, and a method for producing the same, and a method for using the catalyst for an exhaust gas treatment system.

### Background Art

For a SCR catalyst, a synthetic zeolite is known as a catalyst support for its high ammonia absorption ability at a solid acid point, wherein the synthetic zeolite is used for spraying urea water in a diesel automotive post exhaust gas treatment apparatus, wherein an ammonia is used as a reducing agent, the ammonia being obtained by hydrolyzing the urea water (SCR-catalyst as abbreviation for "Selective catalytic reduction").

In an ammonia SCR device with an ammonia derived from urea, several chemical reactions occur, all of which reduce NOx to nitrogen. A dominant reaction is represented by Reaction Equation (1), which proceeds with NO and NH3 in equimolar amounts.

[Chemical formula 1] 4NO + 4NH3 + 02 → 4N2 + 6H2O (1)

Furthermore, Patent Document 1 discloses that as the SCR catalyst, a copper ion exchange zeolite is used which has a CHA crystal structure containing silica and alumina as main components, such as a copper ion exchange zeolite with a molar ratio of silica to alumina of about 15 or more and with an atomic ratio of copper to aluminum of about 0.25 or more.

Patent Document 2 discloses that as the SCR catalyst, an ion-exchanged zeolite of iron and/or copper of SAPO-34 is used which has a CHA crystal structure containing a phosphorus oxide, alumina and silica as main components.

### Citation List

### Patent Literature

Patent Document 1: WO 2008/106519 A1
Patent Document 2: WO 2008/118434 A1

### SUMMARY OF THE INVENTION

Copper ion-exchanged zeolite catalysts are known which serve for selective catalytic reduction of nitric oxide with ammonia. In an exhaust gas regulation for vehicles, not only an initial purification performance is still more increased, but also a guaranteed driving distance. Here, the copper-zeolite catalyst according to Patent Document 1 has a problem that under a severe hydrothermal condition such as reduction of NOx from the exhaust gas, an activity at 200 °C is reduced to 90% after aging by hot water as compared with such an activity before hydrothermal water, which does not satisfy the guarantee of regulation.

On the other hand, the copper zeolite catalyst according to Patent Document 2 has an excellent low-temperature activity and aging durability by hot water as compared with Patent Document 1 However, with increase in the temperature from 350°C, the ammonia produced by hydrolysis of urea water injection is partially oxidized and converted mainly to N2 so that the ammonia become insufficient and the NOx purification performance by ammonia selective reduction is reduced. Therefore, in order to satisfy the exhaust gas regulation, it is necessary to increase a molar ratio of NOx and ammonia in the amount of urea injection (referred to as ANR) to about 1.2 or more at 400°C and to about 1.3 or more at 500 °C. Here, the catalyst according to Patent Document 2 has a problem that an amount of urea water is wasted.

In a competing, non-selective reaction with oxygen, the partial oxidation reaction of ammonia proceeds as an exhaust gas temperature at an SCR catalyst inlet is increased from 350 °C to 500 °C which leads to an increased production of N₂ or N₂O (global warming gas). In this manner, the non-selective reaction consumes ammonia without ammonia being utilized for the reduction of NOx. It is shown in the reaction (2).

[Chemical formula 2] 4NH₃ +30₂ → 2N₂ + 6H₂O (2)

2NH₃ +2O₂ → N2O + 6H2O (3)

On the other hand, when the exhaust gas temperature at the SCR catalyst inlet exceeds 500 °C, the complete oxidation reaction of ammonia proceeds. Ammonia is used for production of NOx directly from the ammonia, without being utilized for the reduction of NOx. In order to satisfy a high degree of exhaust gas regulation, in the case of a highly active NOx purification using a Cu zeolite catalyst, it is necessary to perform a temperature control with an exhaust gas cooling system such as EGR of an internal combustion engine so that the SCR catalyst inlet exhaust gas temperature is reduced to 500 °C or less. However, in the case of PM combustion in which exhaust gas reaches a temperature of 500 °C or more, an oxygen concentration is low to achieve a reduction atmosphere. Therefore, NOx is reduced without performing urea spraying so that it may not be necessary to control the SCR system to 500 °C or less.

[Chemical formula 3] 4NH₃ +5O₂ → 4NO + 6H2O (4)

An object of a catalyst of the present invention is to provide a catalytic material which has a high SCR activity and an improved hydrothermal durability at an exhaust gas under load during a vehicle driving and with a consumption of urea water of ANR in the range of 1.0 to 1.1, from a low temperature (about 200 °C) to a high temperature (about 500°C).

The present invention relates to a zeolite having a crystal structure of CHA, AEI and/or AFX (as defined by the International Zeolite Association), a Cu-zeolite catalyst containing such a zeolite, and an exhaust gas processing (device) with such a catalyst integrated therein. This catalyst may be a part of an exhaust gas processing system which is used for processing an exhaust gas flow (particularly an exhaust gas flow discharged from a gasoline or diesel engine).

An embodiment of the present invention relates to a catalyst having a crystal structure of CHA, AEI and/or AFX and containing a phosphorus oxide of about 15 to about 35% by mass, wherein a molar proportion of silica to alumina is from about 1.9 to about 5.2, and wherein the catalyst further includes a copper-introduced zeolite has an atomic proportion of copper to aluminum of about 0.05 to about 0.1. Furthermore, an embodiment of the present invention relates to use of such a copper-introduced zeolite in an exhaust gas system (such as those designed for reduction of nitrogen oxide). According to certain embodiments, a novel copper-introduced zeolite catalyst is provided (which exhibits NH₃-SCR for NOx-purification). The copper-introduced zeolite produced according to one or more embodiments of the present invention provides a catalyst material which exhibits an excellent stability in hot water and a high catalytic activity within a wide temperature range of 200 °C to 500 °C.

With the catalyst according to the present invention, it is possible to provide an improved catalytic material which has an ANR within a range of 1.0 to 1.1 for urea water consumption amount, a high SCR-activity from low temperatures (about 200 °C) to high temperatures (about 500 °C) and a hot water durability at an exhaust gas temperature during a vehicle driving load.

### BRIEF DESCRIPTION OF THE DRAWINGS

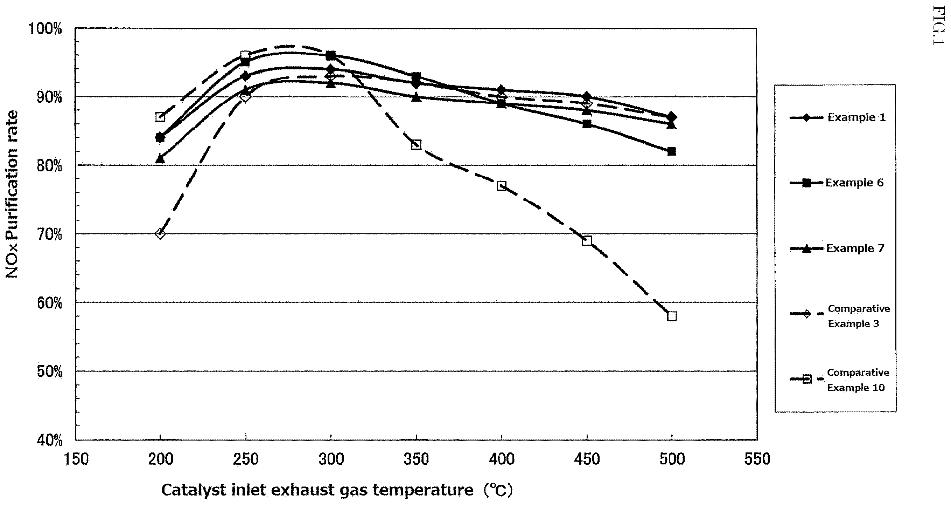

Fig.1 is a graph showing comparisons of NOx purification of fresh (initial) SCR catalysts according to Example 1, Example 6 and Example 7 as well as Comparative Example 3 and Comparative Example 10, wherein Examples 1, 6 and 7 are examples representative of the present invention.

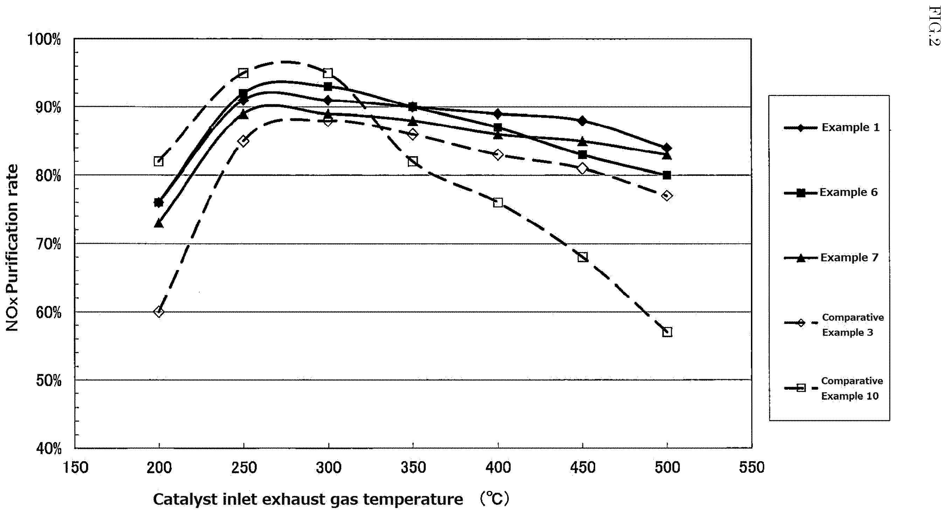

Fig.2 is a graph showing comparisons of NOx purification of the SCR catalysts after aging with hot water (800 °C, 16 hours) according to Example 1, Example 6 and Example 7 as examples representative of the present invention as well as Comparative Example 3 and Comparative Example 10.

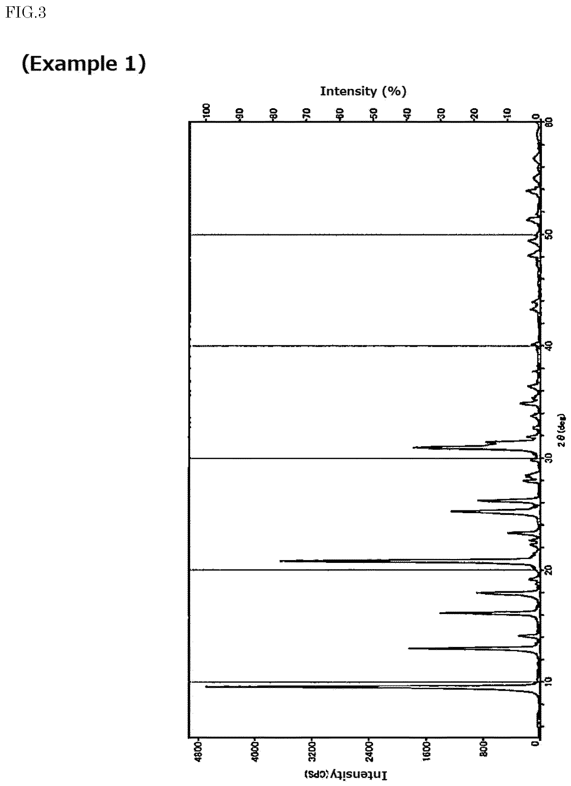

Fig. 3 shows an XRD analysis result of a CHA-type synthetic zeolite comprising a 25.0% phosphorus oxide by mass as a skeleton according to Example 1.

### DETAILED DESCRIPTION OF THE PREFERRED EMBODIMENTS

When compared to a CuCHA zeolite catalyst without phosphorus oxide found in the present technical field, a copper CHA catalytic material according to an embodiment of the present invention improves the activity at low temperature and the stability at hot water. On the other hand, when compared to a CuCHA zeolite catalyst comprising a large amount of phosphorus oxide 40-60% by mass, a CuCHA catalytic material according to an embodiment of the present invention improves the activity at high temperature.

One embodiment of the present invention relates to a catalyst including a zeolite having a crystal structure of CHA, AEI and/or AFX, wherein the zeolite includes a phosphorus oxide of about 15 to about 35% by mass, wherein a molar proportion of silica to alumina is from about 1.9 to about 5.2, and wherein an atomic proportion of copper to aluminum is from about 0.05 to about 0.1. In certain embodiments, the molar proportion of silica to alumina ranges from about 2.0 to about 5.0, and the atomic proportion of copper to aluminum ranges from about 0.06 to 0.09.

In certain embodiments,
the catalyst has the crystal structure of CHA, AEI and/or AFX and
includes the phosphorus oxide of about 17 to about 33 % by mass,
wherein the molar proportion of silica to alumina ranges from about 2.0 to about 5.0, and
wherein the atomic proportion of copper to aluminum ranges from about 0.06 to about 0.09.

In certain embodiments, the present invention relates to a catalyst containing a zeolite including a mixture of a zeolite with a crystal structure of CHA, AEI and/or AFX substantially free of phosphorus oxide (not containing phosphorus oxide added as a zeolite synthetic raw material) and a zeolite with a crystal structure of CHA, AEI and/or AFX containing 40% or more of phosphorus oxide by mass, wherein the zeolite includes the phosphorus oxide from about 15 to about 35% by mass, and wherein the molar proportion of silica to alumina is from about 1.9 to about 5.2, and the atomic proportion of copper to aluminum is from about 0.05 to about 0.1. In certain embodiments, the present invention includes also a catalyst having the molar proportion of silica to alumina within a range from about 2.0 to about 5.0 and the atomic proportion of copper to aluminum within a range from about 0.06 to 0.09.

In at least one embodiment, the catalyst is deposited on a honeycomb substrate. In one or more embodiments, the honeycomb substrate (honeycomb substrate) comprises a wall-flow substrate. In other embodiments, the honeycomb substrate includes a flow-through substrate (flow through substrate). In some embodiments, at least a portion of the flow-through substrate is coated with the CuCHA, CuAEI and/or CuAFX of the present invention (provided to reduce nitrogen oxides contained in a gas flow through the substrate).

In one embodiment using the wall flow substrate, at least a portion of the wall flow substrate is coated with the CuCHA, CuAEI and/or CuAFX according to the present invention applied to reduce an oxide of nitrogen contained in the gas flow through the substrate.

In certain embodiments, the catalyst product includes a honeycomb substrate (having a zeolite having a CHA crystal structure deposited on a substrate), wherein the zeolite has a crystal structure of CHA, AEI and/or AFX, wherein the zeolite includes the phosphorus oxide from about 15 to about 35% by mass, the molar proportion of silica to alumina is from about 1.9 to 5.2, and the atomic proportion of copper to aluminum is from about 0.05 to 0.1. The catalyst product may further include a binder. In certain embodiments, an ion-exchanged copper may use copper acetate, copper nitrate and copper sulfate. Preferably, it is converted using copper acetate and/or copper nitrate.

Another aspect of the present invention relates to an exhaust gas treatment system with the above-described type of catalyst integrated. A still further aspect of the present invention relates to a method of reducing an oxide of nitrogen contained in a gas flow under the presence of oxygen (the method includes bringing the gas flow into contact with a catalyst described above).

### (Detailed Description)

Before describing some exemplary embodiments of the invention, it is to be understood that the invention is not limited to details of the configurations or steps as described below. For the present invention, further embodiments are possible and may be implemented in various ways.

One embodiment of the present invention provides a zeolite having a crystal structure of CHA, AEI and/or AFX, wherein the zeolite includes a phosphorus oxide of about 15 to about 35% by mass, wherein a molar proportion of silica to alumina is from about 1.9 to about 5.2, and wherein an atomic proportion of copper to aluminum is from about 0.05 to about 0.1.

In certain embodiments, the molar proportion of silica to alumina is from about 2.0 to 5.0 and the atomic proportion of copper to aluminum is from about 0.06 to about 0.09. CHA-type SAPO-34 and SSZ-13, AEI-type SAPO-18 and SSZ-39, AFX-type SAPO-56 and SSZ-16 having a CHA, AEI and/or AFX structure are included, however, the present invention is not limited thereto.

Synthesis of zeolites having the structure of CHA, AEI and/or AFX may be carried out according to various techniques known in the art. For example, for typical SAPO-34 or SSZ-13 synthesis, a source of silica, a source of alumina or a source of phosphorus and an organic directing agent are mixed under the alkaline aqueous condition. Typical silica sources are various types of fumed silica, precipitated silica, and colloidal silica, and silicon alkyxide. Typical alumina sources include boehmite, pseudo-boehmite, aluminum hydroxide, aluminum salts such as aluminum sulfate, and aluminium alkoxide. Typical phosphoric acid sources include orthophosphoric acid, hypophosphorous acid or sodium phosphate, and others. In a typical example, sodium hydroxide is added to a reaction mixture, but this is not necessary. Typical directing agents for this synthesis are adamantyltrimethylammonium hydroxide and morpholine, although they may be replaced by other amines and/or quaternary ammonium salts or added to the latter directing agent. The reaction mixture may be heated under stirring in a pressure vessel, wherein the crystalline SAPO-34 (CHA), SSZ-13 (CHA), SAPO-18 (AEI) and SSZ-39 (AEI), SAPO-56 (AFX) and SSZ-16 (AFX) or the product may be mixed after production. A typical reaction temperature ranges from 150-80 °C. Atypical reaction time is 1-5 days.

At the end of the reaction, the product is filtered and washed with water. Alternatively, the product may be separated via centrifugation. Organic additives may be used to aid in the treatment and separation of a solid product. In the treatment (processing) of the product, a spray drying step may be optionally performed. The solid product is thermally treated in air or nitrogen. Alternatively, each gas treatment may be applied in various sequences, or a mixture of gases may be applied. Atypical calcination (firing) temperature ranges from 400-850 °C. Preferably, the calcination temperature is within a range of 700-800 °C.

A zeolite catalyst of CuCHA, CuAEI and/or CuAFX containing the phosphorus oxide according to one or more embodiments of the invention may be used in a catalytic step (which includes an oxidative and/or hydrothermal condition, including e.g. a condition with a temperature greater than about 600 °C, for example greater than about 800 °C, and in the presence of about 10% water vapor). More particularly, the zeolite catalyst of CuCHA, CuAEI and/or CuAFX produced according to embodiments of the present invention has an increased hydrothermal stability as compared to phosphoric acid-free CuCHA, CuAEI and/or CuAFX. The Zeolite catalyst of CuCHA, CuAEI and/or CuAFX produced according to embodiments of the present invention has an improved activity in selective catalytic reduction of NOx with ammonia, and in particular, have an improved activity when operated at a high temperature higher than at least about 600 °C, e.g., at about 800 °C or higher and in about 10% or more steam environment. CuCHA has a high intrinsic activity, which allows the catalytic material used to be reduced to a small amount and thus reduces a back pressure of a honeycomb substrate coated with a CuCHA wash coat. In one or more embodiments, hydrothermal aging represents exposing the catalyst to a high steam environment of about 10% or more at a temperature of about 800 °C, for at least about 5 hours to 25 hours, and in certain embodiments up to about 50 hours.

Embodiments of the present invention relate to an SCR catalyst produced by means of an internal combustion engine and having a crystal structure of CHA, AEI and/or AFX, wherein the SCR catalyst includes a phosphorus oxide of about 15 to about 35% by mass, wherein a molar proportion of silica to alumina is from about 1.9 to about 5.2, and wherein an atomic proportion of copper to aluminum is from about 0.05 to about 0.1, and to an exhaust gas treatment system with the catalyst according to the present invention integrated.

### (Catalytic metal)

As a raw material used for carrying copper (II) ions, acetate, nitrate, and sulfate of copper (II) ions are preferred, and in particular, the acetate and/or nitrate is preferred.

As a method for supporting a metal of a synthetic zeolite, generally, a method such as an ion exchange method, an impregnation support method, an evaporation to dryness method, a precipitation support method, a physical mixing method, a skeleton replacement method, and the like are employed. In view of catalytic activity, it is preferably an ion exchange method.

### (Copper ion exchange)

In the case of the ion exchange method, an aqueous solution of copper acetate (II) and/or copper nitrate (II) adjusted to a pH 0.1-4.0 and a zeolite are dispersed during heating at a temperature of 50 °C to 80 °C to perform ion exchange. In view of the acid resistance of the zeolite, the pH is preferably 3.0-4.0.

### (Post-treatment method)

In the post-treatment step in the production of the SCR catalyst of the present invention, a step of drying, firing, and particle size adjustment of a known method may be used without performing a step of filtration and washing.

### [Examples]

Hereinafter, embodiments of the present invention will be described in more detail with reference to Examples, but the present invention is not limited thereto.

### (Dry)

In the drying step in the production of the SCR catalyst of the present invention, a hot air dryer or a vacuum dryer may be used, and it is preferable that the contained moisture can be dried to about 1% by mass. Considering the drying efficiency, the drying temperature is preferably 120-180 °C.

### (Calcination)

The calcination temperature in the production of the catalyst for SCR of the present invention is preferably 500-850 °C. More preferably, it is 700 °C to 800 °C. Below the lower limit temperature, the copper is not incorporated into a framework of the synthetic zeolite crystal of the present invention so that the catalytic activity is reduced. On the other hand, above the upper limit temperature, crystal decay of the synthetic zeolite proceeds significantly so that the catalytic activity is reduced.

### (Particle size adjustment)

The particle size adjustment may be adjusted by combining grinding and classification of known methods. As the grinding method, a known method may be used, wherein such methods include a ball mill grinder, a pin mill grinder, a hammer mill grinder, and a jet mill grinder. As the classification method, a known method may be used, wherein a vibration sieve, an ultrasonic vibration sieve, a rocking sieve, a turbo screener, and an air flow classifier (a cone type, an elbow jet) may be used.

For the grinding step, a grinding method is preferably which generates single particles without aggregation and without destroying the crystal structure of the synthetic zeolite. If the crystal structure is destroyed, the adsorption ability of ammonia is reduced so that the NOx purification performance is reduced.

An average particle size of the catalyst of the present invention is measured by a laser diffraction particle size meter, and the particle size (D50) corresponding to 50% of a cumulative volume of the particle size distribution is preferably 1-10µm. When the particle diameter (D50) is 1µm or less, the slurry tends to have a high viscosity and may be easily stuffed in holes of the base material. On the other hand, when the particle diameter (D50) is 10pm or more, the coating strength is reduced so that peeling may occur.

In one or more embodiments, a system using an SCR downstream of a diesel oxidation catalyst (DOC) is configured with a DOC, a catalyzed soot filter (CSF), a urea injection section, the SCR catalyst of the present invention and an ammonia oxidation catalyst (AMOX).

In one or more embodiments of the invention, an SCR catalyst composition is wash-coated onto a honeycomb flow-through (flow through) substrate made of ceramics, inorganic fibers or metal.

In other embodiments of the invention, the SCR catalyst composition is wash-coated onto a honeycomb wall-flow substrate made of ceramics.

### (Substrate of SCR catalyst)

The substrate of the SCR catalyst may be of a known honeycomb flow-through type to allow passage treatment of a gas flow, and may include a ceramic, inorganic fiber and metal material. As a honeycomb flow-through monolith support having a sufficient porosity, a known ceramic-like ceramic material such as cordierite, alpha-alumina, silicon carbide, aluminum titanate, silicon nitride, zirconia, mullite, lysianite, alumina-silica-magnesia or zirconium silicate.

As the substrate of the inorganic fibers, silica fibers, alumina fibers and ceramic fibers composed of oxides of silicon, titanium or zirconium can be used. As the metal support, titanium and stainless steel or an alloy containing one or more of nickel, chromium and/or aluminum.

The substrate of the metal may be composed of a metal or a metal alloy. The metal substrate may be in various shapes, e.g. a corrugated sheet or monolith. Suitable metal supports include a heat-resistant metal and a metal alloy, such as other alloys mainly containing titanium and stainless steel and iron (or an alloy largely containing iron). Such an alloy may include one or more nickel, chromium and/or aluminum, and a total amount of these metals advantageously includes at least 15 % of chromium, e.g. 10-25 % of chromium, 3-8 % of aluminum and 20 % or less of nickel of the alloy. The alloy may include a small amount or trace of one or more metals such as manganese, copper, vanadium, titanium, and the like. A surface of the metal substrate may be oxidized at a high temperature, e.g. at 1000 °C or higher, to form an oxide layer on the surface of the substrate, thereby improving the resistance of the alloy to corrosion. Such high-temperature-induced oxidation enhances the adhesion of a refractory metal oxide support and a catalytically promoted metal component to the substrate.

The substrate of the SCR catalyst is preferably made of a honeycomb flow-through monolith type cordierite, particularly in terms of cost.

### (Supporting SCR Catalysts)

As an example of supporting the SCR catalyst, when it is supported on a cordierite honeycomb flow-through monolith support, the SCR catalyst is supported at least at 150g/L or more in order to achieve NOx purification and to maintain long-term use and proper durability of the catalyst. Preferably, it is required that an amount of the SCR catalyst ranging from 170-270 g/L is mounted onto the support.

### (SCR catalyst supporting binder)

Suitable binders for supporting the SCR catalyst include, but are not limited to, alumina and silica. The alumina binder includes aluminum oxide, aluminum hydroxide, and aluminum acid hydroxide. Alumina in the form of an aluminum salt and colloid may also be used. Silica binders include various forms of SiO2 including a colloidal silica. Further, the binder composition may include any combination of zirconia, alumina, and silica.

When deposited on a honeycomb monolith substrate, an SCR catalyst composition as described above are preferably deposited at a concentration of about 150 to about 300g/L (per substrate volume).

The ceramic substrate may be produced from any suitable refractory material, such as cordierite, cordierite-alumina, silicon, nitride, zircon mullite, lysiaopyrite, alumina-silica magnesia, zircon silicate, sillimanite, magnesium silicate, zircon, petalite, alpha-alumina, alumina silicate, and the like.

### (Crystal Structure Analysis)

The present catalyst is identified using the powder method of X-ray diffraction (X-ray Diffraction) analysis by obtaining the lattice-plane spacing (d) from the X-ray diffraction pattern and by comparing it with data recorded in the X-ray diffraction pattern database of the International Society for Synthetic Zeolites or in the Powder Diffraction File (PDF) of ICDD(International Centre for Diffraction Data).

(Catalyst Composition Analysis) 3 mL of HF and 3 mL of HNO3 were added to 50mg of the catalyst according to the present invention, and then dissolved using a microwave oven. Thereafter, a nitric acid was added to the residue to prepare. The prepared liquid and an ICP-AES (Inductively Coupled Plasma-Atomic Emission Spectrometry) were used to carry out a quantitative analysis of the catalyst components.

### (Exhaust gas performance evaluation method)

For the catalyst according to the present invention, a volume density of a simulated gas assuming an exhaust gas was adjusted by a FT-IR spectrometer, and an NOx purification rate was measured at simulated gas temperatures of 200 °C, 250 °C, 300 °C, 350 °C, 400 °C, 450 °C, and 500 °C, corresponding to an actual temperature range of a diesel-vehicle exhaust gas.

### (Hot water aging test method)

The catalyst according to the present invention was subjected to a hydrothermal aging test at a space velocity of 30000/h, a steam of 10%, a temperature of 800 °C, and for 16 hours in a flow reactor.

### (Example 1) Single CHA

In Example 1, a CHA-type zeolite with a phosphorus oxide incorporated into a skeleton was synthesized, and copper was ion-exchanged into the synthetic zeolite to obtain a CuCHA synthetic zeolite.

### (Preparation of Zeolite Raw Materials)

First, ion exchange water and 85% of orthophosphoric acid by mass were mixed under stirring in a glass container. Apseudo-boehmite (Pural SB) was added to it and stirred at room temperature for 20 minutes. Subsequently, adamantyltrimethylammonium hydroxide was slowly added while stirring, and held for 1 hours until the room temperature is reached. Thereafter, colloidal silica (Ludox AS40) was added, and stirring was continued for 5 minutes, and at pH of the suspension of 8.1, to prepare the following composition:
0.5(Al₂O₃): 1.0(P₂O₅): 0.6(SiO₂): 2.1(TMAdaOH): 66(H₂O)

### (Hydrothermal Synthesis)

The obtained suspension was transferred to an autoclave with stirring (pressure sterilizer) and sealed, wherein the suspension was heated at 170 °C for 72 hours while stirring it at a speed of 50 rpm, followed by slow cooling to room temperature. An obtained gel composition was taken out of the autoclave, and a supernatant liquid was taken out of the gel composition, wherein pH of the supernatant liquid was 10.2. To the gel composition from which the supernatant liquid was removed, an equivolumetric amount of ion-exchanged water was added and shaken, wherein washing and solid-liquid separation were then repeated in a centrifuge.

### (CHA-type synthetic zeolite)

The obtained gel composition was transferred into a heat-resistant container and dried at 120 °C for 12 hours, followed by particle size adjustment through a 20 mesh sieve net. From the results of X-ray diffraction analysis, the obtained synthetic zeolite was identified as a zeolite consisting of a silicoaluminophosphate-based CHA-type having a three-dimensional structure with a maximum number of oxygen ring members of 8 by comparing a relative intensity (I) of a main diffraction peak and a lattice-plane spacing (d) with the X-ray diffraction pattern database of the International Society of Synthetic Zeolites and the PDF of ICDD.

As a result of ICP-analysis, it showed that the composition of the CHA-type synthesized zeolite had 25.00wt% of P₂O₅, 52.33wt% of SiO₂, and 23.68wt% of Al₂O₃ as well as SiO₂/Al₂O₃ mol-ratio (SAR) of 3.68.

Subsequently, a CuCHA powder catalyst was produced by mixing 100g of said CHA-type synthetic zeolite with 400mL of 1.0M of copper nitrate (II) solution. The pH was adjusted to 3.5 with acetic acid. The slurry was stirred at 80 °C for 1 hour to perform an ion exchange reaction between the CHA synthetic zeolite and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained copper ion-exchanged CuCHA-type zeolite had an average particle size (D50) of 4µm. Regarding the copper content, an ICP-analysis showed that the zeolite had 2.84 % of CuO by mass and an atomic ratio of Cu/Al of 0.077.

### (Example 2) CHA Mixing

In Example 2, a CHA-type SSZ-13 containing no phosphorus oxide and a CHA-type SAPO-34 containing phosphorus oxide were mixed to prepare a CuCHAcatalyst in which copper was ion-exchanged in the mixed CHA-type synthetic zeolite.

### (Synthesis of Zeolite of CHA-Type SSZ-13)

CHA-type SSZ-13 containing no phosphorus oxide was synthesized according to the following method:

### (Preparation of Zeolite Raw Materials)

First, ion-exchanged water is added into a glass container, and pseudo-boehmite (Pural SB) was added thereto while being stirred, where it is stirred at room temperature for 20 minutes. Then, adamantyltrimethylammonium hydroxide (TMAdaOH) is slowly added thereto while being stirred, and held for 1 hour until room temperature is reached. Thereafter, colloidal silica (Ludox AS40) was added, and stirring was continued for 5 minutes, and at pH of the suspension of 8.4, to prepare the following composition:
0.033(Al₂O₃): 1.0 (SiO₂): 0.19(TMAdaOH): 46(H₂O)

### (Hydrothermal Synthesis)

The obtained suspension was transferred to an autoclave with stirring (pressure sterilizer) and sealed, wherein the suspension was heated at 150 °C for 72 hours while stirring it at a speed of 50 rpm, followed by being gradually cooled to room temperature. An obtained gel composition was taken out of the autoclave, and a supernatant liquid was taken out of the gel composition, wherein pH of the supernatant liquid was 10.6. To the gel composition from which the supernatant liquid was removed, an equivolumetric amount of ion-exchanged water was added and shaken, wherein washing and solid-liquid separation were then repeated in a centrifuge.

### (CHA-type synthetic zeolite)

The obtained gel composition was transferred into a heat-resistant container and dried at 120 °C for 12 hours, followed by particle size adjustment through a 20 mesh sieve net.

From the results of X-ray diffraction analysis, the obtained synthetic zeolite was identified as a zeolite consisting of a CHA-type SSZ-13 having a three-dimensional structure with a maximum number of oxygen ring members of 8 by comparing a relative intensity (I) of a main diffraction peak and a lattice-plane spacing (d) with the X-ray diffraction pattern database of the International Society of Synthetic Zeolites and the PDF of ICDD.

As a result of ICP-analysis, it showed that the composition of the obtained CHA-type SSZ-13 zeolite had 94.65 wt% of SiO2 and 5.35 wt% of Al₂O₃ as well as SiO₂/Al₂O₃ mol-ratio (SAR) of 30.00.

### (Zeolite Synthesis of CHA-Type SAPO-34)

On the other hand, CHA-type SAPO-34 containing a phosphorus oxide was synthesized according to the following method.

### (Preparation of Zeolite Raw Materials)

First, ion exchange water and 85% of orthophosphoric acid by mass were mixed under stirring in a glass container. Apseudo-boehmite (Pural SB) was added to it and stirred at room temperature for 20 minutes. Subsequently, tetraethylammonium hydroxide (TEAOH) was slowly added while stirring, and held for 1 hour until the room temperature is reached. Thereafter, colloidal silica (Ludox AS40) was added, and stirring was continued for 5 minutes, and at pH of the suspension of 8.1, to prepare the following composition:
1.0 (Al₂O₃): 1.0 (P₂O₅): 0.3 (SiO₂): 1.0 (TEAOH): 64 (H₂O)

### (Hydrothermal Synthesis)

The obtained suspension was transferred to an autoclave with stirring (pressure sterilizer) and sealed, wherein the suspension was heated at 170 °C for 72 hours while stirring it at a speed of 50 rpm, followed by being gradually cooled to room temperature. An obtained gel composition was taken out of the autoclave, and a supernatant liquid was taken out of the gel composition, wherein pH of the supernatant liquid was 10.2. To the gel composition from which the supernatant liquid was removed, an equivolumetric amount of ion-exchanged water was added and shaken, wherein washing and solid-liquid separation were then repeated in a centrifuge.

### (CHA-type synthetic zeolite)

The obtained gel composition was transferred into a heat-resistant container and dried at 120 °C for 12 hours, followed by particle size adjustment through a 20 mesh sieve net.

From the results of X-ray diffraction analysis, the obtained synthetic zeolite was identified as a zeolite consisting of a CHA-type SAPO-34 having a three-dimensional structure with a maximum number of oxygen ring members of 8 by comparing a relative intensity (I) of a main diffraction peak and a lattice-plane spacing (d) with the X-ray diffraction pattern database of the International Society of Synthetic Zeolites and the PDF of ICDD.

As a result of ICP-analysis, it showed that the composition of the obtained CHA-type SAPO-34 zeolite had 44.50 wt% of P₂O₅, 9.60 wt% of SiO₂ and 45.90 wt% of Al₂O₃ as well as SiO₂/Al₂O₃ mol-ratio (SAR) of 0.355.

The CHA-type SSZ-13 containing no phosphorus oxide was mixed with the CHA-type SAPO-34 containing phosphorus oxide at a ratio of 1:1 to obtain a mixed CHA-type synthetic zeolite, wherein as a result of ICP analysis, the composition of the CHA-type synthetic zeolite had 22.25 wt% of P₂O₅, 52.13 wt% of SiO₂, and 25.63 wt% of Al₂O₃ as well as a molar ratio of SiO₂/Al₂O₃ (SAR) of 3.45.

Subsequently, a CuCHA powder catalyst was produced by mixing NH₄+-like CHA of 100g of said mixed CHA-type zeolite with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained copper ion-exchanged CuCHA-type zeolite had an average particle size (D50) of 4µm. Regarding the copper content, an ICP-analysis showed that the zeolite had 2.84 % of CuO by mass and an atomic ratio of Cu/Al of 0.071.

### (Example 3) CHA Mixing

In Example 3, a CuCHA catalyst in which copper was ion-exchanged into a mixed CHA-type synthetic zeolite thereof was prepared in the same manner as in Example 2, except that a different ratio was used as the mixing ratio between the CHA-type SSZ-13 containing no phosphorus oxide and the CHA-type SAPO-34 containing phosphorus oxide.

As the zeolite, a same CHA-type SSZ-13 containing no phosphorus oxide and CHA-type SAPO-34 containing a phosphorus oxide were used which were synthesized according to Example 2.

A CHA-type SSZ-13 containing no phosphorus oxide and the CHA-type SAPO-34 containing phosphorus oxide were synthesized in the same manner as Example 2 and mixed at a ratio of 2:3 to obtain a mixed CHA-type synthetic zeolite, wherein as a result of ICP analysis, the CHA-type synthetic zeolite has 26.70 wt% of P₂O₅, 43.62 wt% of SiO₂, and 29.68 wt% of Al₂O₃ as well as a molar ratio of SiO₂/Al₂O₃ (SAR) of 2.49.

Subsequently, in the same manner as Example 2, a CuCHA powder catalyst was produced by mixing NH₄+-like CHA of 100g of said mixed CHA-type synthetic zeolite with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained CuCHA-type zeolite with copper ion-exchanged had an average particle diameter (D50) of 4µm. Regarding the copper content, an ICP-analysis showed that the zeolite had 2.84 % of CuO by mass and an atomic ratio of Cu/Al of 0.061.

### (Example 4) CHA Mixing

In Example 4, a CuCHA catalyst in which copper was ion-exchanged into a mixed CHA-type synthetic zeolite thereof was prepared in the same manner as in Example 2, except that a different ratio was used as the mixing ratio between the CHA-type SSZ-13 containing no phosphorus oxide and the CHA-type SAPO-34 containing phosphorus oxide.

As the zeolite, a same CHA-type SSZ-13 containing no phosphorus oxide and CHA-type SAPO-34 containing a phosphorus oxide were used which were synthesized according to Example 2.

A CHA-type SSZ-13 containing no phosphorus oxide and the CHA-type SAPO-34 containing phosphorus oxide were synthesized in the same manner as Example 2 and mixed at a ratio of 1:2 to obtain a mixed CHA-type synthetic zeolite, wherein as a result of ICP analysis, the CHA-type synthetic zeolite has 29.67 wt% of P₂O₅, 37.95 wt% of SiO₂, and 32.38 wt% of Al₂O₃ as well as a molar ratio of SiO₂/Al₂O₃ (SAR) of 1.99.

Subsequently, in the same manner as Example 2, a CuCHA powder catalyst was produced by mixing NH₄+-like CHA of 100g of said mixed CHA-type synthetic zeolite with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained CuCHA-type zeolite with copper ion-exchanged had an average particle diameter (D50) of 4µm. Regarding the copper content, an ICP-analysis showed that the zeolite had 2.84 % of CuO by mass and an atomic ratio of Cu/Al of 0.056.

### (Example 5)

In Example 5, a CuCHA catalyst in which copper was ion-exchanged into a mixed CHA-type synthetic zeolite thereof was prepared in the same manner as in Example 2, except that a different ratio was used as the mixing ratio between the CHA-type SSZ-13 containing no phosphorus oxide and the CHA-type SAPO-34 containing phosphorus oxide.

As the zeolite, a same CHA-type SSZ-13 containing no phosphorus oxide and CHA-type SAPO-34 containing a phosphorus oxide were used which were synthesized according to Example 2.

The CHA-type SSZ-13 containing no phosphorus oxide was mixed with the CHA-type SAPO-34 containing phosphorus oxide at a ratio of 3:2 to obtain a mixed CHAI-type synthetic zeolite, wherein as a result of ICP analysis, the composition of the CHAI-type synthetic zeolite had 17.80 wt% of P₂O₅, 60.63 wt% of SiO₂, and 21.57 wt% of Al₂O₃ as well as a molar ratio of SiO₂/Al₂O₃ (SAR) of 4.77.

Subsequently, in the same manner as Example 2, a CuCHA powder catalyst was produced by mixing NH₄+-like CHA of 100g of said mixed CHA-type synthetic zeolite with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained copper ion-exchanged CuCHA-type zeolite had an average particle size (D50) of 4µm. Regarding the copper content, an ICP-analysis showed that the zeolite had 2.84 % of CuO by mass and an atomic ratio of Cu/Al of 0.084.

### (Example 6) CHA Mixing

In Example 6, a CuCHA catalyst in which copper was ion-exchanged into a mixed CHA-type synthetic zeolite thereof was prepared in the same manner as in Example 2, except that a different ratio was used as the mixing ratio between the CHA-type SSZ-13 containing no phosphorus oxide and the CHA-type SAPO-34 containing phosphorus oxide.

As the zeolite, a same CHA-type SSZ-13 containing no phosphorus oxide and CHA-type SAPO-34 containing a phosphorus oxide were used which were synthesized according to Example 2.

The CHA-type SSZ-13 containing no phosphorus oxide was mixed with the CHA-type SAPO-34 containing phosphorus oxide at a ratio of 9:20 to obtain a mixed CHA-type synthetic zeolite, wherein as a result of ICP analysis, the composition of the CHA-type synthetic zeolite had 30.69 wt% of P₂O₅, 35.99 wt% of SiO₂, and 33.32 wt% of Al₂O₃ as well as a molar ratio of SiO₂/Al₂O₃ (SAR) of 1.83.

Subsequently, in the same manner as Example 2, a CuCHA powder catalyst was produced by mixing NH₄+-like CHA of 100g of said mixed CHA-type synthetic zeolite with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained copper ion -exchanged CuCHA-type zeolite had an average particle size (D50) of 4µm. Regarding the copper content, an ICP-analysis showed that the zeolite had 2.84 % of CuO by mass and an atomic ratio of Cu/Al of 0.055.

### (Example 7) CHA Mixing

In Example 7, a CuCHA catalyst in which copper was ion-exchanged into a mixed CHA-type synthetic zeolite thereof was prepared in the same manner as in Example 2, except that a different ratio was used as the mixing ratio between the CHA-type SSZ-13 containing no phosphorus oxide and the CHA-type SAPO-34 containing phosphorus oxide.

As the zeolite, a same CHA-type SSZ-13 containing no phosphorus oxide and CHA-type SAPO-34 containing a phosphorus oxide were used which were synthesized according to Example 2.

The CHA-type SSZ-13 containing no phosphorus oxide was mixed with the CHA-type SAPO-34 containing phosphorus oxide at a ratio of 5:3 to obtain a mixed CHAI-type synthetic zeolite, wherein as a result of ICP analysis, the composition of the CHAI-type synthetic zeolite had 16.69 wt% of P₂O₅, 62.76 wt% of SiO₂, and 20.56 wt% of Al₂O₃ as well as a molar ratio of SiO₂/Al₂O₃ (SAR) of 5.18.

Subsequently, in the same manner as Example 2, a CuCHA powder catalyst was produced by mixing NH₄+-like CHA of 100g of said mixed CHA-type synthetic zeolite with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained copper ion-exchanged CuCHA-type zeolite had an average particle size (D50) of 4µm. Regarding the copper content, an ICP-analysis showed that the zeolite had 2.84 % of CuO by mass and an atomic ratio of Cu/Al of 0.089.

### (Example 8) CHA Mixing

In Example 8, a CuCHA catalyst was prepared in the same manner as in Example 2, except that the ion-exchange amount of copper was changed to the mixed CHA-type synthetic zeolite.

As the zeolite, a same CHA-type SSZ-13 containing no phosphorus oxide and CHA-type SAPO-34 containing a phosphorus oxide were used which were synthesized according to Example 2.

In the same manner as in Example 2, the CHA-type SSZ-13 containing no phosphorus oxide was mixed with the CHA-type SAPO-34 containing phosphorus oxide at a ratio of 1:1 to obtain a mixed CHA-type synthetic zeolite, wherein as a result of ICP analysis, the composition of the CHA-type synthetic zeolite had 22.25 wt% of P₂O₅, 52.13 wt% of SiO₂, and 25.63 wt% of Al₂O₃ as well as a molar ratio of SiO₂/Al₂O₃ (SAR) of 3.45.

Subsequently, a CuCHA powder catalyst was produced by mixing NH₄+-like CHA of 100g of said mixed CHA-type zeolite with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated one time and then calcined for 2 hours at a temperature of 700 °C in the atmosphere.

The obtained CuCHA-type zeolite with copper ion-exchanged had an average particle diameter (D50) of 4µm. Regarding the ion-exchange amount of copper, an ICP-analysis showed that the zeolite had 2.03 % of CuO by mass and an atomic ratio of Cu/Al of 0.051.

### (Example 9) CHA Mixing

In Example 9, a CuCHA catalyst was prepared in the same manner as in Example 2, except that the ion-exchange amount of copper was changed to the mixed CHA-type synthetic zeolite.

Subsequently, in the same manner as Example 2, a CuCHA powder catalyst was produced by mixing NH₄+-like CHA of 100g of said mixed CHA-type synthetic zeolite with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 5 times and then calcined for 2 hours at a temperature of 700 °C in the atmosphere.

The obtained copper ion-exchanged CuCHA-type zeolite had an average particle size (D50) of 4µm. Regarding the ion-exchange amount of copper, an ICP-analysis showed that the zeolite had 4.06 % of CuO by mass and an atomic ratio of Cu/Al of 0.102.

### (Example 10) CHA Mixing

In Example 10, a CuCHA catalyst in which copper was ion-exchanged into mixed CHA-type synthetic zeolite was prepared in the same manner as in Example 2, except that a different method was used for producing the CHA-type SAPO-34 containing phosphorus oxide and a different ion-exchange amount of copper was used for the mixed CHA-type synthetic zeolite.

### (Preparation of Zeolite Raw Materials)

First, ion exchange water and 85% of orthophosphoric acid by mass were mixed under stirring in a glass container. A pseudo-boehmite (Pural SB) was added to it and stirred at room temperature for 20 minutes. Subsequently, tetrahydroparaoxazine (THPO, also known as morpholine) was slowly added while stirring, and held for 1 hour until the room temperature is reached. Thereafter, colloidal silica (Ludox AS40) was added, and stirring was continued for 5 minutes, and a suspension having a pH of 8.1 was prepared to prepare a composition having 1.0 (Al₂O₃):1.06(P₂O₅):0.28(SiO₂):2.09(THPO):66(H₂O)

### (Hydrothermal Synthesis)

The obtained suspension was transferred to an autoclave with stirring (pressure sterilizer) and sealed, wherein the suspension was heated at 170 °C for 24 hours while stirring it at a speed of 150 rpm, followed by being gradually cooled to room temperature. An obtained gel composition was taken out of the autoclave, and the supernatant liquid was taken out of the gel composition, and the pH of the supernatant liquid was 10.2. To the gel composition from which the supernatant liquid was removed, an equivolumetric amount of ion-exchanged water was added and shaken, wherein washing and solid-liquid separation were then repeated in a centrifuge.

### (CHA-type synthetic zeolite)

To the heat-resistant container, the obtained gel composition was transferred, and dried at 120 °C for 12 hours, and subjected to firing at 620 °C for 5 hours, gradually cooled to room temperature, and then subjected to particle size adjustment through a sieve net of 20 mesh.

An X-ray diffraction analysis of an obtained hydrogenated CHA-type synthetic zeolite showed that the crystal-lattice plane (Miller index: 100) had d = 9.4076 [Å]. After comparison with the X-ray diffraction pattern data base of the International Society of Synthetic Zeolites and the PDFs of ICDD, this crystal structure was identified as a zeolite of SAPO-34 consisting of a silicoaluminophosphate-based CHA-type having a maximum oxygen ring number of 8 and a three-dimensional structure.

As a result of ICP-analysis, it showed that the composition of the obtained CHA-type SAPO-34 zeolite had 50.00 wt% of P₂O₅, 8.00 wt% of SiO₂ and 42.00 wt% of Al₂O₃ as well as SiO₂/Al₂O₃ mol-ratio (SAR) of 0.323.

The CHA-type SSZ-13 containing no phosphorus oxide according to Example 2 was mixed with the CHA-type SAPO-34 containing phosphorus oxide at a ratio of 1:1 to obtain a mixed CHA-type synthetic zeolite, wherein as a result of ICP analysis, the composition of the CHA-type synthetic zeolite had 25.00 wt% of P₂O₅, 51.33 wt% of SiO₂, and 23.68 wt% of Al₂O₃ as well as a molar ratio of SiO₂/Al₂O₃ (SAR) of 3.68.

Subsequently, in the same manner as Example 2, a CuCHA powder catalyst was produced by mixing NH₄+-like CHA of 100g of said mixed CHA-type synthetic zeolite with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 2 times and then calcined for 2 hours at a temperature of 700 °C in the atmosphere.

The obtained CuCHA-type zeolite with copper ion-exchanged had an average particle diameter (D50) of 4µm. Regarding the copper content, an ICP-analysis showed that the zeolite had 2.43 % of CuO by mass and an atomic ratio of Cu/Al of 0.066.

### (Example 11) CHA Mixing

In Example 11, a CuCHA catalyst was prepared in the same manner as in Example 10, except that a different amount of copper was introduced into the CHA-type synthetic zeolite.

As the zeolite, a same CHA-type SSZ-13 containing no phosphorus oxide and CHA-type SAPO-34 containing a phosphorus oxide were used which were synthesized according to Example 2.

Subsequently, in the same manner as Example 2, a CuCHA powder catalyst was produced by mixing NH₄+-like CHA of 100g of said mixed CHA-type synthetic zeolite with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 4 times and then calcined for 2 hours at a temperature of 700 °C in the atmosphere.

The obtained CuCHA-type zeolite with copper ion-exchanged had an average particle diameter (D50) of 4µm. Regarding the copper content, an ICP-analysis showed that the zeolite had 3.65 % of CuO by mass and an atomic ratio of Cu/Al of 0.099.

### (Example 12) AEI Mixing

In Example 12, an AEI-type SSZ-39 containing no phosphorus oxide and an AEI-type SAPO-18 containing phosphorus oxide were mixed to prepare a CuAEI catalyst in which copper was ion-exchanged in the mixed AEI-type synthetic zeolite.

### (Synthesis of AEI-type SSZ-39)

The AEI-type SSZ-39 containing no phosphorus oxide was synthesized according to the following method:

### (Preparation of Zeolite Raw Materials)

First, ion-exchanged water is put into a glass container, and thereto, a predetermined amount of IN of NaOH and an N,N-diethyl-cis-2,6-dimethylpiperazinium cation hydroxide (DEDMPOH) were added under stirring, and then stirred at room temperature for 20 minutes. Next, a predetermined amount of NH₄+-like Y-type zeolite and colloidal silica (Ludox AS40) was added thereto, and stirring was continued for 5 minutes, and at pH of the suspension of 9.2, to prepare the following composition:
0.06 (Al203): 1.0 (SiO2): 0.35 (DEDMPOH): 43 (H2O)

### (Hydrothermal Synthesis)

The obtained suspension was transferred to an autoclave with stirring (pressure sterilizer), sealed, and heated at 140 ° C for 7 days while stirring at a rate of 50rpm, and then gradually cooled to room temperature. An obtained gel composition was taken out of the autoclave, and the supernatant liquid was taken out of the gel composition, and the pH of the supernatant liquid was 11.3. To the gel composition from which the supernatant liquid was removed, an equivolumetric amount of ion-exchanged water was added and shaken, wherein washing and solid-liquid separation were then repeated in a centrifuge.

### (AEI-type synthetic zeolite)

The obtained gel composition was transferred into a heat-resistant container and dried at 120 °C for 12 hours, followed by particle size adjustment through a 20 mesh sieve net. From the results of X-ray diffraction analysis, the obtained synthetic zeolite was identified as a zeolite consisting of an AEI-type SSZ-39 having a three-dimensional structure with a maximum number of oxygen ring members of 8 by comparing a relative intensity (I) of a main diffraction peak and a lattice-plane spacing (d) with the X-ray diffraction pattern database of the International Society of Synthetic Zeolites and the PDF of ICDD.

As a result of ICP-analysis, it showed that the composition of the obtained AEI-type SSZ-39 zeolite had 89.65 wt% of SiO₂ and 10.35 wt% of Al₂O₃ as well as SiO₂/Al₂O₃ mol-ratio (SAR) of 14.7.

### (Synthesis of Zeolite of AEI-Type SAPO-18)

On the other hand, AEI-type SAPO-18 containing a phosphorus oxide was synthesized according to the following method.

### (Preparation of Zeolite Raw Materials)

First, ion exchange water and 85% of orthophosphoric acid by mass were mixed under stirring in a glass container. A pseudo-boehmite (Pural SB) was added to it and stirred at room temperature for 20 minutes. Subsequently, tetraethylammonium hydroxide (TEAOH) was slowly added while stirring, and held for 1 hour until the room temperature is reached. Thereafter, colloidal silica (Ludox AS40) was added, and stirring was continued for 5 minutes, and at pH of the suspension of 7.8, to prepare the following composition:
1.0 (Al2O3): 0.98 (P205): 0.075 (SiO2): 1.0 (TEAOH): 64 (H2O)

### (Hydrothermal Synthesis)

The obtained suspension was transferred to an autoclave with stirring (pressure sterilizer) and sealed, wherein the suspension was heated at 215 °C for 120 hours while stirring it at a speed of 50 rpm, followed by being gradually cooled to room temperature. An obtained gel composition was taken out of the autoclave, and the supernatant liquid was taken out of the gel composition, and the pH of the supernatant liquid was 9.2. To the gel composition from which the supernatant liquid was removed, an equivolumetric amount of ion-exchanged water was added and shaken, wherein washing and solid-liquid separation were then repeated in a centrifuge.

### (AEI-type synthetic zeolite)

The obtained gel composition was transferred into a heat-resistant container and dried at 120 °C for 12 hours, followed by particle size adjustment through a 20 mesh sieve net. From the results of X-ray diffraction analysis, the obtained synthetic zeolite was identified as a zeolite consisting of an AEI-type SAPO-18 having a three-dimensional structure with a maximum number of oxygen ring members of 8 by comparing a relative intensity (I) of a main diffraction peak and a lattice-plane spacing (d) with the X-ray diffraction pattern database of the International Society of Synthetic Zeolites and the PDF of ICDD.

As a result of ICP-analysis, it showed that the composition of the obtained AEI-type SAPO-18 zeolite had 61.00 wt% of P₂O₅, 1.80 wt% of SiO₂ and 37.20 wt% of Al₂O₃ as well as SiO₂/Al₂O₃ mol-ratio (SAR) of 0.082.

The AEI-type SSZ-39 containing no phosphorus oxide was mixed with the AEI-type SAPO-18 containing phosphorus oxide at a ratio of 1:1 to obtain a AEI-type zeolite, wherein as a result of ICP analysis, the composition of the AEI-type zeolite had 30.50 wt% of P₂O₅, 45.72 wt% of SiO₂, and 23.78 wt% of Al₂O₃ as well as a molar ratio of SiO₂/Al₂O₃ (SAR) of 3.26.

A CuAEI powder catalyst was then produced by mixing 100g of said mixed AEI-type synthetic zeolite of NH₄+-like AEI with 400mL of 1.0M of copper nitrate (II) solution in the same manner as in Example 2 The pH was adjusted to 3.5 with acetic acid. The slurry was stirred at 80 °C for 1 h to perform ion-exchange reactions between NH₄+-like AEI and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained copper ion-exchanged CuAEI-type zeolite had an average particle diameter (D50) of 4µm. Regarding the copper content, an ICP-analysis showed that the zeolite had 2.84 % of CuO by mass and an atomic ratio of Cu/Al of 0.077.

### (Example 13) AEI Mixing

In Example 13, a CuAEI catalyst was prepared in the same manner as in Example 12, except that a different ratio was used as the mixing ratio between the AEI-type SSZ-39 containing no phosphorus oxide and the AEI-type SAPO-18 containing phosphorus oxide.

As the zeolite, an AEI-type SSZ-39 containing no identical phosphorus oxide synthesized in Example 12 and an AEI-type SAPO-18 containing phosphorus oxide were used.

A phosphorus oxide-free AEI-type SSZ-39 and an AEI-type SAPO-18 containing a phosphorus oxide were mixed at 2:3, and the composition of the obtained mixed AEI-type synthetic zeolite was subjected to ICP analysis, and as a result, a P₂O₅ was 36.60wt%, a SiO₂ was 36.93wt%, and a Al₂O₃ was 26.46wt%, and a molar ratio (SAR) of SiO₂/Al₂O₃ was 2.37.

A CuAEI powder catalyst was then produced by mixing 100g of said mixed AEI-type synthetic zeolite of NH₄+-like AEI with 400mL of 1.0M of copper nitrate (II) solution in the same manner as in Example 2 The pH was adjusted to 3.5 with acetic acid. The slurry was stirred at 80 °C for 1 h to perform ion-exchange reactions between NH₄+-like AEI and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained copper ion-exchanged CuAEI-type zeolite had an average particle diameter (D50) of 4µm. Regarding the copper content, an ICP-analysis showed that the zeolite had 2.84 % of CuO by mass and an atomic ratio of Cu/Al of 0.069.

### (Example 14) AEI Mixing

In Example 14, a CuAEI catalyst was prepared in the same manner as in Example 12, except that a different ratio was used as the mixing ratio between the AEI-type SSZ-39 containing no phosphorus oxide and the AEI-type SAPO-18 containing phosphorus oxide.

As the zeolite, an AEI-type SSZ-39 containing no identical phosphorus oxide synthesized in Example 12 and an AEI-type SAPO-18 containing phosphorus oxide were used.

The AEI-type SSZ-39 containing no phosphorus oxide was mixed with the AEI-type SAPO-18 containing phosphorus oxide at a ratio of 5:3 to obtain a AEI-type zeolite, wherein as a result of ICP analysis, the composition of the AEI-type zeolite had 22.88 wt% of P₂O₅, 56.70 wt% of SiO₂, and 20.42 wt% of Al₂O₃ as well as a molar ratio of SiO₂/Al₂O₃ (SAR) of 4.71.

A CuAEI powder catalyst was then produced by mixing 100g of said mixed AEI-type synthetic zeolite of NH₄+-like AEI with 400mL of 1.0M of copper nitrate (II) solution in the same manner as in Example 2 The pH was adjusted to 3.5 with acetic acid. The slurry was stirred at 80 °C for 1 h to perform ion-exchange reactions between NH₄+-like AEI and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained copper ion-exchanged CuAEI-type zeolite had an average particle diameter (D50) of 4µm. Regarding the copper content, an ICP-analysis showed that the zeolite had 2.84 % of CuO by mass and an atomic ratio of Cu/Al of 0.089.

### (Example 15) AEI Mixing

In Example 15, a CuAEI catalyst was prepared in the same manner as in Example 2, except that the ion-exchange amount of copper was changed to the mixed AEI-type synthetic zeolite.

As the zeolite, an AEI-type SSZ-39 containing no identical phosphorus oxide synthesized in Example 12 and an AEI-type SAPO-18 containing phosphorus oxide were used.

A CuAEI powder catalyst was then produced by mixing 100g of said mixed AEI-type synthetic zeolite of NH₄+-like AEI with 400mL of 1.0M of copper nitrate (II) solution in the same manner as in Example 2 The pH was adjusted to 3.5 with acetic acid. The slurry was stirred at 80 °C for 1 h to perform ion-exchange reactions between NH₄+-like AEI and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated one time and then calcined for 2 hours at a temperature of 700 °C in the atmosphere.

The obtained copper ion-exchanged CuAEI-type zeolite had an average particle diameter (D50) of 4µm. Regarding the copper content, an ICP-analysis showed that the zeolite had 2.03 % of CuO by mass and an atomic ratio of Cu/Al of 0.055.

### (Example 16) AEI Mixing

In Example 16, a CuAEI catalyst was prepared in the same manner as in Example 2, except that the ion-exchange amount of copper was changed to the mixed AEI-type synthetic zeolite.

As the zeolite, an AEI-type SSZ-39 containing no identical phosphorus oxide synthesized in Example 12 and an AEI-type SAPO-18 containing phosphorus oxide were used.

A CuAEI powder catalyst was then produced by mixing 100g of said mixed AEI-type synthetic zeolite of NH₄+-like AEI with 400mL of 1.0M of copper nitrate (II) solution in the same manner as in Example 2 The pH was adjusted to 3.5 with acetic acid. The slurry was stirred at 80 °C for 1 h to perform ion-exchange reactions between NH₄+-like AEI and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 5 times and then calcined for 2 hours at a temperature of 700 °C in the atmosphere.

The obtained copper ion-exchanged CuAEI-type zeolite had an average particle diameter (D50) of 4µm. Regarding the copper content, an ICP-analysis showed that the zeolite had 4.07 % of CuO by mass and an atomic ratio of Cu/Al of 0.110.

### (Example 17) AEI+CHA heterologous mixing

In Example 17, an AEI-type SSZ-39 containing no phosphorus oxide was mixed with a CHA-type SAPO-34 containing phosphorus oxide to produce a heterogeneous synthetic zeolite, and copper was ion-exchanged in the heterogeneous mixed synthetic zeolite to prepare a Cu heterogeneous mixed zeolite catalyst.

The AEI-type SSZ-39 was prepared by means of the zeolite synthesis in the same manner as in Example 12. On the other hand, the CHA-type SAPO-34 was prepared by means of the zeolite synthesis in the same manner as in Example 2.

The phosphorus oxide-free AEI-type SSZ-39 and the CHA-type SAPO-34 containing the phosphorus oxide were mixed at 1:1, and the composition of the obtained mixed zeolite was analyzed by ICP, and as a result, P₂O₅ was 22.25wt%, SiO₂ was 49.63wt%, and Al₂O₃ was 28.13wt%, and the molar ratio (SAR) of SiO₂/Al₂O₃ was 2.99.

Subsequently a mixed powder catalyst of CuAEI-type zeolite with CuCHA-type zeolite was produced by mixing an NH₄+-like state of 100g of said heterogeneous mixed synthetic zeolite with 400mL of 1.0M of copper nitrate (II) solution, in the same manner as in Example 2. The pH was adjusted to 3.5 with acetic acid. The slurry was stirred at 80 °C for 1 hour to perform an ion-exchange reaction between NH₄+ and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained copper ion-exchanged heterologous mixed catalyst of CuAEI-type zeolite and CuCHA-type zeolite had an average particle diameter (D50) of 4µm. Regarding the copper content, an ICP-analysis showed that the zeolite had 2.84 % of CuO by mass and an atomic ratio of Cu/Al of 0.065.

### (Example 18) CHA+AEI heterologous mixing

In Example 18, a heterologous synthetic zeolite of a CHA type SSZ-13 containing no phosphorus oxide and an AEI type SAPO-18 containing a phosphorus oxide was mixed, and copper was ion-exchanged into the heterologous mixed synthetic zeolite to prepare a Cu heterologous mixed zeolite catalyst.

Said CHA-type SSZ-13 was synthesized zeolite in the same manner as in Example 2. On the other hand, in the AEI-type SAPO-18, a zeolite was synthesized in the same manner as in Example 12.

The composition of the obtained heterologous mixed zeolite was obtained by mixing a CHA-type SSZ-13 containing no phosphorus oxide and an AEI-type SAPO-18 containing phosphorus oxide at 1:1, and as a result of ICP analysis, a P₂O₅ was 30.50wt%, a SiO₂ was 48.22wt%, and a Al₂O₃ was 21.28wt%, and a molar ratio (SAR) of SiO₂/Al₂O₃ was 3.85.

Then, a mixed powder catalyst of a CuCHA type zeolite and a CuAFI type zeolite was produced by mixing a NH₄+ of 100g of the heterologous mixed synthetic zeolite with a copper nitrate (II) solution having a 1.0M of 400mL in the same manner as in Example 2. The pH was adjusted to 3.5 with acetic acid. The slurry was stirred at 80 ° C for 1 hour to perform an ion-exchange reaction between NH₄+ and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The heterologous mixed zeolite catalyst obtained by ion-exchanging the obtained copper had an average particle diameter (D50) of 4µm. Regarding the copper content, an ICP-analysis showed that the zeolite had 2.84 % of CuO by mass and an atomic ratio of Cu/Al of 0.086.

### (Example 19) CHA+AFX heterologous mixing

In Example 19, a heterologous synthetic zeolite of a CHA type SSZ-13 containing no phosphorus oxide and an AFX type SAPO-56 containing a phosphorus oxide was mixed, and copper was ion-exchanged into the heterologous mixed synthetic zeolite to prepare a Cu heterologous mixed zeolite catalyst.

Said CHA-type SSZ-13 was synthesized zeolite in the same manner as in Example 2.

### (Synthesis of Zeolite of CHA-Type SAPO-56)

On the other hand, AFX-type SAPO-56 containing a phosphorus oxide was synthesized according to the following method.

### (Preparation of Zeolite Raw Materials)

First, ion exchange water and 85% of orthophosphoric acid by mass were mixed under stirring in a glass container. Apseudo-boehmite (Pural SB) was added to it and stirred at room temperature for 20 minutes. Then, N,N,N', N'-tetramethylhexane-1,6-diamine (TMHD) is slowly added while stirring and held at room temperature for 1 hours. Thereafter, colloidal silica (Ludox AS40) was added, and stirring was continued for 5 minutes, and at pH of the suspension of 7.8, to prepare the following composition:
0.8(Al2O3): 0.8(P2O5): 0.6(SiO2): 2.0(TMHD): 40(H2O)

### (Hydrothermal Synthesis)

The obtained suspension was transferred to an autoclave with stirring (pressure sterilizer), sealed, and heated at 200 °C for 48 hours with stirring at 50rpm speed, followed by slow cooling to room temperature. An obtained gel composition was taken out of the autoclave, and the supernatant liquid was taken out of the gel composition, and the pH of the supernatant liquid was 9.2. To the gel composition from which the supernatant liquid was removed, an equivolumetric amount of ion-exchanged water was added and shaken, wherein washing and solid-liquid separation were then repeated in a centrifuge.

### (AFX-type synthetic zeolite)

The obtained gel composition was transferred into a heat-resistant container and dried at 120 °C for 12 hours, followed by particle size adjustment through a 20 mesh sieve net. From the results of X-ray diffraction analysis, the obtained synthetic zeolite was identified as a zeolite consisting of AFX-type SAPO-56 having a three-dimensional structure with a maximum number of oxygen ring members of 8, by examining the relative intensity (I) of the main diffraction peak and the lattice-plane spacing (d) in light of the X-ray diffraction pattern database of the International Society of Synthetic Zeolites and the PDF of ICDD.

The resulting AFX-type SAPO-56 zeolites were analyzed by ICP. P₂O₅ was 44.43wt%, SiO₂ was 14.30wt%, and Al₂O₃ was 41.27wt%, and SiO_{2/}Al₂O₃ mol-ratio (SAR) was 0.588.

The composition of the obtained heterologous mixed zeolite was obtained by mixing a CHA-type SSZ-13 containing no phosphorus oxide and an AFX-type SAPO-56 containing phosphorus oxide at 1:1, and as a result of ICP analysis, a P₂O₅ was 22.22wt%, a SiO₂ was 54.48wt%, and a Al₂O₃ was 23.31wt%, and a molar ratio (SAR) of SiO₂/Al₂O₃ was 3.97.

Then, in the same manner as in Example 2, a mixed powder catalyst of a CuCHA type and a CuAFX type was produced by mixing a NH₄+ of 100g of the heterologous mixed synthetic zeolite with a copper nitrate (II) solution having a 1.0M of 400mL The pH was adjusted to 3.5 with acetic acid. The slurry was stirred at 80 ° C. for 1 hour to perform an ion-exchange reaction between NH₄+ and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The heterologous mixed zeolite catalyst obtained by ion-exchanging the obtained copper had an average particle diameter (D50) of 4µm. ICP-analysis of the copper content, CuO was 2.84 wt%, Cu/Al was 0.078 at atomic ratio.

### (Example 20) AEI+AFX heterologous mixing

In Example 20, a heterologous synthetic zeolite of an AEI-type SSZ-39 containing no phosphorus oxide and an AFX-type SAPO-56 containing a phosphorus oxide was mixed, and copper was ion-exchanged into the heterologous mixed synthetic zeolite to prepare a Cu heterologous mixed zeolite catalyst.

The AEI-type SSZ-39 was prepared by means of the zeolite synthesis in the same manner as in Example 12. On the other hand, in the AFX-type SAPO-56, a zeolite was synthesized in the same manner as in Example 19.

A phosphorus oxide-free AEI-type SSZ-39 and an AFX-type SAPO-56 containing a phosphorus oxide were mixed at 1:1, and the obtained mixed zeolite was subjected to ICP analysis, and as a result, a P₂O₅ was 22.22wt%, a SiO₂ was 51.98wt%, and a Al₂O₃ was 25.81wt%, and a molar ratio (SAR) of SiO₂/Al₂O₃ was 3.42.

Then, a mixed powder catalyst of a CuAEI type zeolite and a CuAFX type zeolite was produced by mixing a NH₄+ of 100g of the heterologous mixed synthetic zeolite with a copper nitrate (II) solution having a 1.0M of 400mL in the same manner as in Example 2. The pH was adjusted to 3.5 with acetic acid. The slurry was stirred at 80 ° C for 1 hour to perform an ion-exchange reaction between NH₄+ and copper ions. An obtained mixture was then filtered and washed with 800mL of deionized water until the filtrate became clear and colorless. Then, after drying the washed sample at a temperature of 90 °C, the above-described steps including the ion exchange, filtration, washing and drying were repeated 3 times and then calcined for 2 hours at a temperature of 700 °C in the atmosphere.

The obtained mixed catalyst of the copper ion-exchanged CuAEI type zeolite and CuAFX type zeolite had an average particle diameter (D50) of 4µm. Regarding the copper content, an ICP-analysis showed that the zeolite had 2.84 % of CuO by mass and an atomic ratio of Cu/Al of 0.071.

### (Comparative Example 1) Single CHA

In Comparative Example 1, synthesis was performed in the same manner as the CHA-type SSZ-13 zeolite of Example 2. As a result of ICP-analysis, it showed that the composition of the obtained CHA-type SSZ-13 zeolite had 94.65 wt% of SiO₂ and 5.35 wt% of Al₂O₃ as well as SiO₂/Al₂O₃ mol-ratio (SAR) of 30.00.

Subsequently, a CuCHA catalyst was produced by ion-exchange of copper in the CHA-type SSZ-13 zeolite.The CuCHA powder catalyst was produced by mixing NH₄+-like CHA of 100g of SSZ-13 with 400mL of 1.0M of copper nitrate (II) solution. The pH was adjusted to 3.5 with acetic acid. The slurry was stirred at 80 °C for 1 hour to perform an ion exchange reaction between the NH₄+-like CHA and copper ions. An obtained mixture was then filtered and washed with 800mL of deionized water until the filtrate became clear and colorless. The washed sample was then dried at a temperature of 90°C. The above-described steps including ion exchange, filtration, washing and drying were repeated 2 times.

Next, the obtained CuCHA product was calcined for 2 hours at 700 °C in the atmosphere. Measurement by ICP-analysis showed that the obtained CuCHA catalyst contained 2.41% CuO with an atomic ratio of Cu/Al of 0.30. The average particle size (D50) was 4µm.

### (Comparative Example 2) Single CHA

In Comparative Example 2, a CuCHA catalyst was obtained in the same manner as in Comparative Example 1, except that a copper (II) nitrate solution of 2.0M was added to the coating slurry of Comparative Example 1, and that a total CuO level was set to 3.20%. The CuCHA catalyst had an atomic ratio of Cu/Al of 0.40 and a mean particle size (D50) of 4µm.

### (Comparative Example 3) Single CHA

In Comparative Example 3, a zeolite was synthesized in the same manner as the CHA-type SSZ-13 zeolite of Example 2. As a result of ICP-analysis, it showed that the composition of the obtained CHA-type SSZ-13 zeolite had 94.65 wt% of SiO₂ and 5.35 wt% of Al₂O₃ as well as SiO₂/Al₂O₃ mol-ratio (SAR) of 30.00.

In the same manner as in Comparative Example 1, a CuCHA powder catalyst was produced by mixing 400mL of NH₄+ CHA of 100g of CHA type SSZ-13 zeolite and a solution of 1.0M of copper (II) nitrate. The pH was adjusted to 3.5 with acetic acid. The slurry was stirred at 80 °C for 1 hour to perform an ion exchange reaction between the NH₄+-like CHA and copper ions.

An obtained mixture was then filtered and air-dried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated three times and then calcined for 2 hours at a temperature of 700 °C in the atmosphere.

The obtained CuCHA catalyst contained 2.75 mass% of CuO. The CuCHA catalyst had an atomic ratio of Cu/Al of 0.33 and a mean particle size (D50) of 4µm.

### (Comparative Example 4) Single CHA

In Comparative Example 4, a zeolite was synthesized in the same manner as the CHA-type SSZ-13 zeolite of Example 2. As a result of ICP-analysis, it showed that the composition of the obtained CHA-type SSZ-13 zeolite had 94.65 wt% of SiO₂ and 5.35 wt% of Al₂O₃as well as SiO₂/Al₂O₃ mol-ratio (SAR) of 30.0.

In the same manner as in Comparative Example 1, a CuCHA powder catalyst was produced by mixing 400mL of NH₄+ CHA of 100g of CHA type SSZ-13 zeolite and a solution of 1.0M of copper nitrate (II). The pH was adjusted to 3.5 with acetic acid. The slurry was stirred at 80 °C for 1 hour to perform an ion exchange reaction between the NH₄+-like CHA and copper ions. An obtained mixture was then filtered and air-dried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated four times and then calcined for 2 hours at a temperature of 700 °C in the atmosphere.

The obtained CuCHA catalyst contained 3.36 mass% of CuO. The CuCHA catalyst had an atomic ratio of Cu/Al of 0.38 and a mean particle size (D50) of 4µm.

### (Comparative Example 5) Single CHA

In Comparative Example 5, a zeolite was synthesized in the same manner as the CHA-type SSZ-13 zeolite of Example 2As a result of ICP-analysis, it showed that the composition of the obtained CHA-type SSZ-13 zeolite had 94.65 wt% of SiO₂ and 5.35 wt% of Al₂O₃ as well as SiO₂/Al₂O₃ mol-ratio (SAR) of 30.00. In the same manner as in Comparative Example 1, a CuCHA powder catalyst was produced by mixing 400mL of NH₄+ CHA of 100g of CHA type SSZ-13 zeolite and a solution of 1.0M of copper nitrate (II). The pH was adjusted to 3.5 with acetic acid. The slurry was stirred at 80 °C for 1 hour to perform an ion exchange reaction between the NH₄+-like CHA and copper ions. An obtained mixture was then filtered and air-dried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated five times and then calcined for 2 hours at a temperature of 700 °C in the atmosphere.

The obtained CuCHA catalyst contained 3.85 mass% of CuO. The CuCHA catalyst had an atomic ratio of Cu/Al of 0.44 and a mean particle size (D50) of 4µm.

### (Comparative Example 6) Single CHA

In Comparative Example 6, a zeolite was synthesized in the same manner as the CHA-type SSZ-13 zeolite of Example 2. As a result of ICP-analysis, it showed that the composition of the obtained CHA-type SSZ-13 zeolite had 94.65 wt% of SiO₂ and 5.35 wt% of Al₂O₃ as well as SiO₂/Al₂O₃ mol-ratio (SAR) of 30.00. In the same manner as in Comparative Example 1, a CuCHA powder catalyst was produced by mixing 400mL of NH₄+ CHA of 100g of CHA type SSZ-13 zeolite and a solution of 1.0M of copper nitrate (II). The pH was adjusted to 3.5 with acetic acid. The slurry was stirred at 80 °C for 1 hour to perform an ion exchange reaction between the NH₄+-like CHA and copper ions. An obtained mixture was then filtered and air-dried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated one time and then calcined for 2 hours at a temperature of 700 °C in the atmosphere.

The obtained CuCHA catalyst contained 1.94 mass% of CuO. The CuCHA catalyst had an atomic ratio of Cu/Al of 0.24 and a mean particle size (D50) of 4µm.

### (Comparative Example 7) Single CHA

In Comparative Example 7, a zeolite was synthesized in the same manner as the CHA-type SSZ-13 zeolite of Example 2, but with a modified composition of the CHA-type SSZ-13 of Example 2.

### (Preparation of Zeolite Raw Materials)

First, ion-exchanged water is added into a glass container, and pseudo-boehmite (Pural SB) was added thereto while being stirred, where it is stirred at room temperature for 20 minutes. Then, adamantyltrimethylammonium hydroxide (TMAdaOH) is slowly added thereto while being stirred, and held for 1 hour until room temperature is reached. Thereafter, colloidal silica (Ludox AS40) was added, and stirring was continued for 5 minutes, and at pH of the suspension of 8.0, to prepare the following composition:
0.063 (Al₂O₃): 1.0 (SiO₂): 0.19 (TMAdaOH): 46 (H₂O)

### (Hydrothermal Synthesis)

The obtained suspension was transferred to an autoclave with stirring (pressure sterilizer) and sealed, wherein the suspension was heated at 150 °C for 72 hours while stirring it at a speed of 50 rpm, followed by being gradually cooled to room temperature. An obtained gel composition was taken out of the autoclave, and a supernatant liquid was taken out of the gel composition, wherein pH of the supernatant liquid was 10.2. To the gel composition from which the supernatant liquid was removed, an equivolumetric amount of ion-exchanged water was added and shaken, wherein washing and solid-liquid separation were then repeated in a centrifuge.

### (CHA-type synthetic zeolite)

The obtained gel composition was transferred into a heat-resistant container and dried at 120 °C for 12 hours, followed by particle size adjustment through a 20 mesh sieve net.

The obtained synthetic zeolite was analyzed by X-ray diffraction analysis which showed that a crystal lattice plane (Miller index: 100) of the synthetic zeolite was d=9.4085 [Å]. The crystal structure was compared with the X-ray diffraction pattern data base of the International Society of Synthetic Zeolites and the PDFs of ICDD and identified as a zeolite consisting of CHA-type SSZ-13 with a maximal oxygen-ring number of 8 and a three-dimensional structure. As a result of ICP-analysis, it showed that the composition of the obtained CHA-type SSZ-13 zeolite had 89.84 wt% of SiO₂ and 10.16 wt% of Al₂O₃ as well as SiO₂/Al₂O₃ mol-ratio (SAR) of 15.0. In the same manner as in Comparative Example 1, a CuCHA powder catalyst was produced by mixing 400mL of NH₄+ CHA of 100g of CHA type SSZ-13 zeolite and a solution of 1.0M of copper nitrate (II). The pH was adjusted to 3.5 with acetic acid. The slurry was stirred at 80 °C for 1 hour to perform an ion exchange reaction between the NH₄+-like CHA and copper ions. An obtained mixture was then filtered and air-dried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated six times and then calcined for 2 hours at a temperature of 700 °C in the atmosphere.

The obtained CuCHA catalyst contained 4.57 mass% of CuO. The CuCHA catalyst had an atomic ratio of Cu/Al of 0.30 and a mean particle size (D50) of 4µm.

### (Comparative Example 8) Single CHA

In Comparative Example 8, a zeolite was synthesized in the same manner as the CHA-type SSZ-13 zeolite of Example 2. As a result of ICP-analysis, it showed that the composition of the obtained CHA-type SSZ-13 zeolite had 94.65 wt% of SiO₂ and 5.35 wt% of Al₂O₃ as well as SiO₂/Al₂O₃ mol-ratio (SAR) of 30.0.

In the same manner as in Comparative Example 1, a CuCHA powder catalyst was produced by mixing 400mL of NH₄+ CHA of 100g of CHA type SSZ-13 zeolite and a solution of 1.0M of copper nitrate (II). The pH was adjusted to 3.5 with acetic acid. The slurry was stirred at 80 °C for 1 hour to perform an ion exchange reaction between the NH₄+-like CHA and copper ions. An obtained mixture was then filtered and air-dried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated three times and then calcined for 2 hours at a temperature of 700 °C in the atmosphere.

The obtained CuCHA catalyst contained 2.94 mass% of CuO.The CuCHA catalyst had an atomic ratio of Cu/Al of 0.36 and a mean particle size (D50) of 4µm.

### (Comparative Example 9) Single CHA

In Comparative Example 9, a zeolite was synthesized in the same manner as the CHA-type SSZ-13 zeolite of Example 2. As a result of ICP-analysis, it showed that the composition of the obtained CHA-type SSZ-13 zeolite had 94.65 wt% of SiO₂ and 5.35 wt% of Al₂O₃ as well as SiO₂/Al₂O₃ mol-ratio (SAR) of 30.0.

In the same manner as in Comparative Example 1, a CuCHA powder catalyst was produced by mixing 400mL of NH₄⁺ CHA of 100g of CHA type SSZ-13 zeolite and a solution of 1.0M of copper nitrate (II). The pH was adjusted to 3.5 with acetic acid. The slurry was stirred at 80 °C for 1 hour to perform an ion exchange reaction between the NH₄⁺-like CHA and copper ions. An obtained mixture was then filtered and air-dried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated five times and then calcined for 2 hours at a temperature of 700 °C in the atmosphere.

The obtained CuCHA catalyst contained 3.70 mass% of CuO. The CuCHA catalyst had an atomic ratio of Cu/Al of 0.46 and a mean particle size (D50) of 4µm.

### (Comparative Example 10) Single CHA

In Comparative Example 10, a zeolite was synthesized in the same manner as the CHA-type SAPO-34 zeolite of Example 2.

As a result of ICP-analysis, it showed that the composition of the obtained CHA-type SAPO-34 zeolite had 44.50 wt% of P2O5, 9.60 wt% of SiO2 and 45.90 wt% of Al2O3 as well as SiO2/Al2O3 mol-ratio (SAR) of 0.35.

In the same manner as in Comparative Example 1, a CuCHA powder catalyst was produced by mixing 400mL of NH₄⁺ CHA of 100g of CHA type SSZ-13 zeolite and a solution of 1.0M of copper nitrate (II). The pH was adjusted to 3.5 with acetic acid. The slurry was stirred at 80 °C for 1 hour to perform an ion exchange reaction between the NH₄⁺-like CHA and copper ions. An obtained mixture was then filtered and air-dried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated three times and then calcined for 2 hours at a temperature of 700 °C in the atmosphere.

The obtained CuCHA-type zeolite with copper ion-exchanged had an average particle diameter (D50) of 4µm. Regarding the copper content, an ICP-analysis showed that the zeolite had 3.00 % of CuO by mass and an atomic ratio of Cu/Al of 0.042.

### (Comparative Example 11) Single CHA

In Comparative Example 11, a zeolite was synthesized in the same manner as the CHA-type SAPO-34 zeolite of Example 2.

As a result of ICP-analysis, it showed that the composition of the obtained CHA-type SAPO-34 zeolite had 44.50 wt% of P₂O₅, 9.60 wt% of SiO₂ and 45.90 wt% of Al₂O₃ as well as SiO₂/Al₂O mol-ratio (SAR) of 0.35.

In the same manner as in Comparative Example 1, a CuCHA powder catalyst was produced by mixing 400mL of NH₄⁺ CHA of 100g of CHA type SSZ-13 zeolite and a solution of 1.0M of copper nitrate (II). The pH was adjusted to 3.5 with acetic acid. The slurry was stirred at 80 °C for 1 hour to perform an ion exchange reaction between the NH₄⁺-like CHA and copper ions. An obtained mixture was then filtered and airdried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated 5 times and then calcined for 2 hours at a temperature of 700 °C in the atmosphere.

The obtained CuCHA type synthetic zeolite had an average particle diameter (D50) of 4µm. Regarding the copper content, an ICP-analysis showed that the zeolite had 4.38 % of CuO by mass and an atomic ratio of Cu/Al of 0.061.

### (Comparative Example 12) Single CHA

In Comparative Example 12, a zeolite was synthesized in the same manner as the CHA-type SAPO-34 zeolite of Example 2. As a result of ICP-analysis, it showed that the composition of the obtained CHA-type SAPO-34 zeolite had 44.50 wt% of P₂O₅, 9.60 wt% of SiO₂ and 45.90 wt% of Al₂O₃ as well as SiO₂/Al₂O₃ mol-ratio (SAR) of 0.35.

In the same manner as in Comparative Example 1, a CuCHA powder catalyst was produced by mixing 400mL of NH₄⁺ CHA of 100g of CHA type SSZ-13 zeolite and a solution of 1.0M of copper nitrate (II). The pH was adjusted to 3.5 with acetic acid. The slurry was stirred at 80 °C for 1 hour to perform an ion exchange reaction between the NH₄⁺-like CHA and copper ions. An obtained mixture was then filtered and airdried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated one time and then calcined for 2 hours at a temperature of 700 °C in the atmosphere.

The obtained CuCHA type synthetic zeolite had an average particle diameter (D50) of 4µm. Regarding the copper content, an ICP-analysis showed that the zeolite had 2.08 % of CuO by mass and an atomic ratio of Cu/Al of 0.029.

### (Comparative Example 13) Single CHA

In Comparative Example 13, a zeolite was synthesized in the same manner as the CHA-type SAPO-34 zeolite of Example 2. As a result of ICP-analysis, it showed that the composition of the obtained CHA-type SAPO-34 zeolite had 44.50 wt% of P2O5, 9.60 wt% of SiO2 and 45.90 wt% of Al2O3 as well as SiO2/Al2O3 mol-ratio (SAR) of 0.35.

In the same manner as in Comparative Example 1, a CuCHA powder catalyst was produced by mixing 400mL of NH₄⁺ CHA of 100g of CHA type SSZ-13 zeolite and a solution of 1.0M of copper nitrate (II). The pH was adjusted to 3.5 with acetic acid. The slurry was stirred at 80 °C for 1 hour to perform an ion exchange reaction between the NH₄⁺-like CHA and copper ions. An obtained mixture was then filtered and airdried. The obtained mixture after the above mentioned steps including ion exchange and filtration were then filtered and washed with 800mL of deionized water until the filtrate became clear and colorless. Then, after drying the washed sample at a temperature of 90 °C, the above-described steps including the ion exchange, filtration, washing and drying were repeated one time and then calcined for 2 hours at a temperature of 700 °C in the atmosphere.

The obtained CuCHA type synthetic zeolite had an average particle diameter (D50) of 4µm. Regarding the copper content, an ICP-analysis showed that the zeolite had 1.97 % of CuO by mass and an atomic ratio of Cu/Al of 0.028.

### (Comparative Example 14) Single AEI

In Comparative Example 14, a zeolite was synthesized in the same manner as the AEI-type SAPO-18 zeolite of Example 12. As a result of ICP-analysis, it showed that the composition of the obtained AEI-type SAPO-18 zeolite had 61.00 wt% of P₂O₅, 1.80 wt% of SiO₂ and 37.20 wt% of Al₂O₃ as well as SiO₂/Al₂O₃ mol-ratio (SAR) of 0.08.

Subsequently, a CuAEI catalyst was produced by ion-exchange of copper in the AEI-type SAPO-18 zeolite.The CuCHA powder catalyst was produced by mixing NH4⁺-like CHA of 100g of single SAPO-18 zeolite with 400mL of 1.0M of copper nitrate (II) solution. The pH was adjusted to 3.5 with acetic acid. The slurry was stirred at 80 °C for 1 h to perform ion-exchange reactions between NH₄⁺-like AEI and copper ions. An obtained mixture was then filtered and washed with 800mL of deionized water until the filtrate became clear and colorless. The washed sample was then dried at a temperature of 90°C. After repeating the above described steps, including ion exchange, filter, washing and drying, 1 times, calcination was carried out in air at 700 °C for 2 hours.

As a result of ICP-analysis, it showed that the obtained CuAEI catalyst had 1.80 % of CuO by mass. Further, the CuAEI catalyst had a mean particle size (D50) of 4µm with an atomic ratio of Cu/Al of 0.031.

### (Comparative Example 15) Single AEI

In Comparative Example 15, an AEI-type SAPO-18 was synthesized in the same manner as in Example 12. As a result of ICP-analysis, it showed that the composition of the obtained AEI-type SAPO-18 zeolite had 61.00 wt% of P₂O₅, 1.80 wt% of SiO₂ and 37.20 wt% of Al₂O₃ as well as SiO₂/Al₂O₃ mol-ratio (SAR) of 0.08.

Subsequently, a CuAEI catalyst was produced by ion-exchange of copper in the AEI-type SAPO-18 zeolite. The CuCHA powder catalyst was produced by mixing NH₄⁺-like CHA of 100g of single SAPO-18 zeolite with 400mL of 1.0M of copper nitrate (II) solution. The pH was adjusted to 3.5 with acetic acid. The slurry was stirred at 80 °C for 1 h to perform ion-exchange reactions between NH₄⁺-like AEI and copper ions. An obtained mixture was then filtered and washed with 800mL of deionized water until the filtrate became clear and colorless. The washed sample was then dried at a temperature of 90°C. After repeating the above described steps including ion exchange, filtration, washing and drying 3 times, calcination was carried out in air at 700 °C for 2 hours.

As a result of ICP-analysis, it showed that the obtained CuAEI catalyst had 3.00 % of CuO by mass. Further, the CuAEI catalyst had a mean particle size (D50) of 4µm with an atomic ratio of Cu/Al of 0.053.

### (Comparative Example 16) Single AEI

In Comparative Example 16, an AEI-type SAPO-18 was synthesized in the same manner as in Example 12. The resulting AEI-type SAPO-18 zeolites were analyzed by ICP. P₂O₅ was 61.00wt%, SiO₂ was 1.80wt%, and Al₂O₃ was 37.20wt%, and SiO₂/Al₂O₃ mol-ratio (SAR) was 0.082.

Subsequently, a CuAEI catalyst was produced by ion-exchange of copper in the AEI-type SAPO-18 zeolite.The CuCHA powder catalyst was produced by mixing NH₄⁺-like CHA of 100g of single SAPO-18 zeolite with 400mL of 1.0M of copper nitrate (II) solution. The pH was adjusted to 3.5 with acetic acid. The slurry was stirred at 80 °C for 1 h to perform ion-exchange reactions between NH₄⁺-like AEI and copper ions. An obtained mixture was then filtered and washed with 800mL of deionized water until the filtrate became clear and colorless. The washed sample was then dried at a temperature of 90°C. After repeating the above described steps including ion exchange, filtration, washing and drying 5 times, calcination was carried out in air at 700 °C for 2 hours.

As a result of ICP-analysis, it showed that the obtained CuAEI catalyst had 4.38 % of CuO by mass. Further, the CuAEI catalyst had a mean particle size (D50) of 4µm with an atomic ratio of Cu/Al of 0.075.

Table 1 shows SCR-catalysts obtained according to Examples 1 to 20 as well as according to Comparative Examples 1 to 16.

Next, the SCR-catalysts according to Examples 1 to 19 and Comparative Examples 1 to 16 were deposited onto a known cordierite honeycomb flow through substrate by preparing a colloidal silica binder (containing 20 mass% of solid content) and a slurry liquid.

### (Slurry formulation)

| | |
|---|---|
| Ion-exchanged water: | 30 g |
| SCR catalyst powder: | 30 g |
| Colloidal silica binder: | 15 g |

The slurry liquid was dispersed in a ball mill, and deposited in 200 g/L per volume of the honeycomb substrate. Thereafter, it was dried at a temperature of 80 °C and calcined at a temperature of 500 °C to perform an exhaust gas purification performance test.

| | |
|---|---|
| Space velocity (SV): | 50000/h |
| Temperature: | 150 to 500 °C |
| Nitric oxide concentration: | 500 ppm |
| Ammonia concentration: | 500 ppm |
| Propane concentration: | 100 ppm |
| Carbon oxide concentration: | 50 ppm |
| Oxygen concentration: | 10 % |
| Carbon dioxide concentration: | 10 % |
| Water concentration: | 10 % |
| Nitrogen concentration: | Balance |

### (Hot water aging test conditions)

For the hot water aging test, the SCR-catalysts were processed in a flow reactor under the following atmosphere:

| | |
|---|---|
| Space velocity (SV): | 30000/h |
| Temperature: | 800°C |
| Duration: | 16 hours |
| Water concentration: | 10 % |
| Oxygen concentration: | 10 % |
| Nitrogen concentration: | Balance |

All of Examples 1 to 20 exhibited a high activity at low temperature in the NOx-purification and a good durability activity after aging via hot water, as compared to Comparative Examples 1 to 9. Furthermore, all of Examples 1 to 20 exhibited a high activity at high temperature in the NOx-purification, as compared to Comparative Examples 10 to 16.

**[Table 1]**

| | Zeolite structure | SiO2/Al2O3 mol ratio | Cu/Al atomic ratio | CuO wt% | P2O5 wt% | SiO2 wt% | Al2O3 wt% |
|---|---|---|---|---|---|---|---|
| Example 1 | Single CHA | 3.68 | 0.08 | 2.84 | 25.00 | 51.33 | 23.68 |
| Example 2 | CHA mixing | 3.45 | 0.071 | 2.84 | 22.25 | 52.13 | 25.63 |
| Example 3 | CHA mixing | 2.49 | 0.061 | 2.84 | 26.70 | 43.62 | 29.68 |
| Example 4 | CHA mixing | 1.99 | 0.056 | 2.84 | 29.67 | 37.95 | 32.38 |
| Example 5 | CHA mixing | 4.77 | 0.084 | 2.84 | 17.80 | 60.63 | 21.57 |
| Example 6 | CHA mixing | 1.83 | 0.055 | 2.84 | 30.69 | 35.99 | 33.32 |
| Example 7 | CHA mixing | 5.18 | 0.089 | 2.84 | 16.69 | 62.76 | 20.56 |
| Example 8 | CHA mixing | 3.45 | 0.051 | 2.03 | 22.25 | 52.13 | 25.63 |
| Example 9 | CHA mixing | 3.45 | 0.102 | 4.06 | 22.25 | 52.13 | 25.63 |
| Example 10 | CHA mixing | 3.68 | 0.066 | 2.43 | 25.00 | 51.33 | 23.68 |
| Example 11 | CHA mixing | 3.68 | 0.099 | 3.65 | 25.00 | 51.33 | 23.68 |
| Example 12 | AEI mixing | 3.26 | 0.077 | 2.84 | 30.50 | 45.72 | 23.78 |
| Example 13 | AEI mixing | 2.37 | 0.069 | 2.84 | 36.60 | 36.93 | 26.46 |
| Example 14 | AEI mixing | 4.71 | 0.089 | 2.84 | 22.88 | 56.70 | 20.42 |
| Example 15 | AEI mixing | 3.26 | 0.055 | 2.03 | 30.50 | 45.72 | 23.78 |
| Example 16 | AEI mixing | 3.26 | 0.110 | 4.07 | 30.50 | 45.72 | 23.78 |
| Example 17 | AEI+CHA mixing | 2.99 | 0.065 | 2.84 | 22.25 | 49.63 | 28.13 |
| Example 18 | CHA+AEI mixing | 3.85 | 0.086 | 2.84 | 30.50 | 48.22 | 21.28 |
| Example 19 | CHA+AFX mixing | 3.97 | 0.078 | 2.84 | 22.22 | 54.48 | 23.31 |
| Example 20 | AEI+AFX mixing | 3.42 | 0.071 | 2.84 | 22.22 | 51.98 | 25.81 |
| Comparative Example 1 | Single CHA | 30.0 | 0.300 | 2.41 | not contained | 94.65 | 5.35 |
| Comparative Example 2 | Single CHA | 30.0 | 0.400 | 3.20 | not contained | 94.65 | 5.35 |
| Comparative Example 3 | Single CHA | 30.0 | 0.330 | 2.75 | not contained | 94.65 | 5.35 |
| Comparative Example 4 | Single CHA | 30.0 | 0.380 | 3.36 | not contained | 94.65 | 5.35 |
| Comparative Example 5 | Single CHA | 30.0 | 0.440 | 3.85 | not contained | 94.65 | 5.35 |
| Comparative Example 6 | Single CHA | 30.0 | 0.240 | 1.94 | not contained | 94.65 | 5.35 |
| Comparative Example 7 | Single CHA | 15.0 | 0.300 | 4.57 | not contained | 89.84 | 10.16 |
| Comparative Example 8 | Single CHA | 30.0 | 0.360 | 2.94 | not contained | 94.65 | 5.35 |
| Comparative Example 9 | Single CHA | 30.0 | 0.460 | 3.70 | not contained | 94.65 | 5.35 |
| Comparative Example 10 | Single CHA | 0.35 | 0.04 | 3.00 | 44.50 | 9.60 | 45.90 |
| Comparative Example 11 | Single CHA | 0.35 | 0.06 | 4.38 | 44.50 | 9.60 | 45.90 |
| Comparative Example 12 | Single CHA | 0.35 | 0.03 | 2.08 | 44.50 | 9.60 | 45.90 |
| Comparative Example 13 | Single CHA | 0.35 | 0.03 | 1.97 | 44.50 | 9.60 | 45.90 |
| Comparative Example 14 | Single AEI | 0.08 | 0.03 | 1.80 | 61.00 | 1.80 | 37.20 |
| Comparative Example 15 | Single AEI | 0.08 | 0.05 | 3.00 | 61.00 | 1.80 | 37.20 |
| Comparative Example 16 | Single AEI | 0.08 | 0.08 | 4.38 | 61.00 | 1.80 | 37.20 |

**[Table 2]**

| **Initial** | 200°C | 250°C | 300°C | 350°C | 400°C | 450°C | 500°C |
|---|---|---|---|---|---|---|---|
| Example 1 | 84% | 93% | 94% | 92% | 91% | 90% | 87% |
| Example 2 | 82% | 93% | 94% | 93% | 92% | 91% | 89% |
| Example 3 | 85% | 93% | 94% | 92% | 91% | 90% | 87% |
| Example 4 | 84% | 94% | 95% | 92% | 90% | 88% | 85% |
| Example | 82% | 91% | 92% | 90% | 89% | 88% | 86% |
| Example 6 | 84% | 95% | 96% | 93% | 89% | 86% | 82% |
| Example 7 | 81% | 91% | 92% | 90% | 89% | 88% | 86% |
| Example 8 | 80% | 92% | 93% | 92% | 91% | 90% | 88% |
| Example 9 | 82% | 93% | 95% | 92% | 90% | 88% | 86% |
| Example 10 | 81% | 92% | 94% | 92% | 91% | 89% | 87% |
| Example 11 | 84% | 93% | 95% | 92% | 90% | 88% | 85% |
| Example 12 | 81% | 93% | 94% | 93% | 92% | 91% | 89% |
| Example 13 | 81% | 91% | 92% | 90% | 89% | 88% | 86% |
| Example 14 | 84% | 95% | 96% | 93% | 89% | 86% | 82% |
| Example 15 | 82% | 92% | 93% | 92% | 91% | 90% | 88% |
| Example 16 | 81% | 93% | 95% | 92% | 90% | 88% | 86% |
| Example 17 | 80% | 93% | 94% | 93% | 92% | 91% | 89% |
| Example 18 | 82% | 94% | 95% | 92% | 90% | 88% | 85% |
| Example 19 | 84% | 95% | 95% | 93% | 89% | 86% | 82% |
| Example 20 | 81% | 92% | 93% | 92% | 91% | 90% | 88% |
| Comparative Example 1 | 72% | 90% | 93% | 92% | 91% | 90% | 89% |
| Comparative Example 2 | 74% | 91% | 94% | 93% | 91% | 90% | 88% |
| Comparative Example 3 | 70% | 90% | 93% | 92% | 90% | 89% | 87% |
| Comparative Example 4 | 75% | 92% | 95% | 93% | 91% | 89% | 86% |
| Comparative Example 5 | 76% | 92% | 95% | 93% | 92% | 89% | 85% |
| Comparative Example 6 | 69% | 89% | 91% | 89% | 88% | 87% | 86% |
| Comparative Example 7 | 76% | 92% | 95% | 93% | 90% | 88% | 84% |
| Comparative Example 8 | 73% | 92% | 94% | 92% | 91% | 89% | 86% |
| Comparative Example 9 | 72% | 90% | 94% | 93% | 92% | 90% | 86% |
| Comparative Example 10 | 87% | 96% | 96% | 83% | 77% | 69% | 58% |
| Comparative Example 11 | 83% | 94% | 93% | 85% | 77% | 68% | 57% |
| Comparative Example 12 | 88% | 96% | 97% | 88% | 81% | 73% | 61% |
| Comparative Example 13 | 85% | 93% | 94% | 85% | 78% | 70% | 60% |
| Comparative Example 14 | 83% | 92% | 93% | 83% | 77% | 70% | 60% |
| Comparative Example 15 | 85% | 93% | 94% | 84% | 77% | 72% | 60% |
| Comparative Example 16 | 84% | 92% | 93% | 83% | 78% | 71% | 60% |

**[Table 3]**

| After hot water aging | 200°C | 250°C | 300°C | 350°C | 400°C | 450°C | 500°C |
|---|---|---|---|---|---|---|---|
| Example 1 | 76% | 91% | 91% | 90% | 89% | 88% | 84% |
| Example 2 | 75% | 9.1% | 91% | 90% | 89% | 88% | 86% |
| Example 3 | 78% | 91% | 91% | 89% | 88% | 87% | 84% |
| Example 4 | 76% | 91% | 93% | 89% | 88% | 85% | 82% |
| Example 5 | 75% | 88% | 89% | 88% | 86% | 85% | 83% |
| Example 6 | 76% | 92% | 93% | 90% | 87% | 83% | 80% |
| Example 7 | 73% | 89% | 89% | 88% | 86% | 85% | 83% |
| Example 8 | 72% | 89% | 90% | 89% | 88% | 87% | 85% |
| Example 9 | 75% | 90% | 93% | 89% | 88% | 85% | 84% |
| Example 10 | 73% | 89% | 91% | 89% | 88% | 86% | 84% |
| Example 11 | 76% | 90% | 92% | 90% | 87% | 86% | 82% |
| Example 12 | 74% | 91% | 91% | 90% | 89% | 88% | 87% |
| Example 13 | 73% | 88% | 89% | 88% | 86% | 85% | 83% |
| Example 14 | 76% | 93% | 93% | 90% | 86% | 84% | 80% |
| Example 15 | 75% | 89% | 91% | 89% | 88% | 87% | 85% |
| Example 16 | 73% | 90% | 92% | 89% | 87% | 85% | 83% |
| Example 17 | 73% | 91% | 91% | 91% | 89% | 88% | 87% |
| Example 18 | 74% | 91% | 93% | 89% | 87% | 86% | 82% |
| Example 19 | 77% | 92% | 92% | 91% | 86% | 83% | 80% |
| Example 20 | 73% | 90% | 90% | 89% | 88% | 87% | 86% |
| Comparative Example 1 | 62% | 85% | 88% | 85% | 83% | 82% | 79% |
| Comparative Example 2 | 65% | 86% | 90% | 86% | 83% | 82% | 78% |
| Comparative Example 3 | 60% | 85% | 88% | 86% | 83% | 81% | 77% |
| Comparative Example 4 | 65% | 88% | 91% | 86% | 83% | 81% | 76% |
| Comparative Example 5 | 67% | 87% | 90% | 87% | 84% | 82% | 76% |
| Comparative Example 6 | 59% | 84% | 87% | 83% | 81% | 79% | 76% |
| Comparative Example 7 | 66% | 88% | 90% | 87% | 83% | 80% | 74% |
| Comparative Example 8 | 64% | 87% | 90% | 85% | 83% | 82% | 77% |
| Comparative Example 9 | 62% | 86% | 89% | 87% | 84% | 82% | 76% |
| Comparative Example 10 | 82% | 95% | 95% | 82% | 76% | 68% | 57% |
| Comparative Example 11 | 79% | 93% | 92% | 84% | 76% | 66% | 56% |
| Comparative Example 12 | 83% | 95% | 96% | 86% | 80% | 72% | 59% |
| Comparative Example 13 | 81% | 92% | 93% | 84% | 77% | 69% | 59% |
| Comparative Example 14 | 78% | 91% | 92% | 82% | 76% | 68% | 59% |
| Comparative Example 15 | 81% | 92% | 93% | 82% | 76% | 71% | 58% |
| Comparative Example 16 | 79% | 91 % | 92% | 82% | 77% | 70% | 59% |

**[Table 4]**

| **(Example1**) | | |
|---|---|---|
| 2*θ* | d(Å) | I(%) |
| 9.58 | 9.225 | 100 |
| 13.02 | 6.794 | 39 |
| 14.12 | 6.267 | 6 |
| 16.18 | 5.474 | 29 |
| 17.98 | 4.929 | 19 |
| 19.2 | 4.619 | 3 |
| 20.82 | 4.263 | 75 |
| 22.26 | 3.990 | 3 |
| 22.64 | 3.924 | 3 |
| 23.3 | 3.815 | 10 |
| 25.24 | 3.526 | 26 |
| 26.2 | 3.399 | 18 |
| 27.98 | 3.186 | 5 |
| 28.48 | 3.131 | 4 |
| 29.86 | 2.990 | 3 |
| 30.94 | 2.888 | 34 |
| 31.42 | 2.845 | 14 |
| 31.92 | 2.801 | 3 |
| 32.74 | 2.733 | 2 |
| 33.78 | 2.651 | 3 |
| 33.80 | 2.650 | 3 |
| 34.90 | 2.569 | 6 |
| 35.38 | 2.535 | 3 |
| 36.44 | 2.464 | 4 |
| 37.76 | 2.380 | 2 |
| 40.16 | 2.244 | 3 |
| 40.26 | 2.238 | 2 |
| 43.24 | 2.091 | 2 |
| 43.38 | 2.084 | 2 |
| 43.88 | 2.062 | 2 |
| 48.10 | 1.890 | 3 |
| 48.22 | 1.886 | 3 |
| 49.44 | 1.842 | 4 |
| 51.24 | 1.781 | 3 |
| 51.42 | 1.776 | 4 |
| 53.86 | 1.701 | 4 |
| 55.08 | 1.666 | 3 |
| 56.74 | 1.621 | 2 |

## Claims

1. A catalyst comprising a copper-introduced zeolite,
wherein the copper-introduced zeolite has a crystal structure of CHA, AEI and/or AFX,
wherein the copper-introduced zeolite contains a phosphorus oxide of about 15 to about 35% by mass,
wherein a molar proportion of silica to alumina is from about 1.9 to about 5.2, and
wherein an atomic proportion of copper to aluminum is from about 0.05 to about 0.1.

2. The catalyst according to claim 1,
wherein the copper-introduced zeolite contains the phosphorus oxide of about 17 to about 33 % by mass,
wherein the molar proportion of silica to alumina is within a range from about 2.0 to about 5.0, and
wherein the atomic proportion of copper to aluminum is within a range from about 0.06 to about 0.09.

3. The catalyst according to claim 1 or 2,
wherein the catalyst has a NOx-conversion performance of at least 85 % at a temperature 200°C, and the NOx-conversion performance of at least 85 % at a temperature of about 500°C, at same molar concentrations of an exhaust gas containing nitric monoxide and ammonia used for selective reduction thereof without excess or shortage.

4. The catalyst according to any one of claims 1 to 3,
wherein the catalyst after aging by hot water of 800°C has the NOx-conversion performance of at least 95 % at about 200°C with respect to a NOx-conversion performance of the catalyst before hydrothermal aging which is achieved at about 200°C.

5. The catalyst according to any one of claims 1 to 4, containing copper oxide of at least about 2.00 % by mass.

6. The catalyst according to claim 1,
wherein the catalyst is deposited on a honeycomb substrate.

7. The catalyst according to any one of claims 1 to 6,
wherein at least a part of a flow-through substrate is covered with CuCHA, CuAEI or CuAFX applied for reduction of oxide of nitrogen included in a gas flow which passes through the substrate.

8. The catalyst according to claim 7,
wherein at least a part of a wall-flow substrate is covered with CuCHA, CuAEI or CuAFX applied for reduction of oxide of nitrogen included in a gas flow which passes through the substrate.

9. A catalyst product comprising:
a zeolite deposited on a substrate, wherein the zeolite has a crystal structure of CHA, AEI and/or AFX; and
a honeycomb substrate,
wherein the zeolite includes:
a phosphorus oxide of about 15 to about 35% by mass;
a molar proportion of silica to alumina from about 1.9 to about 5.2; and
an atomic proportion of copper to aluminum of about 0.05 to about 0.1.

10. A method of producing the catalyst according to any one of claims 1 to 8, comprising:
exchanging ion-exchange copper by means of copper acetate and/or copper nitrate.

## Amended claims

Statement under Art. 19.1 PCT
**1.** A catalyst comprising a copper-introduced zeolite,
wherein the copper-introduced zeolite has a crystal structure of CHA, AEI and/or AFX,
wherein the copper-introduced zeolite contains a phosphorus oxide of about 15 to about 35% by mass,
wherein a molar proportion of silica to alumina is from about 1.9 to about 5.2,
wherein an atomic proportion of copper to aluminum is from about 0.05 to about 0.1, and
wherein the catalyst has a NOx-conversion performance of at least 80 % at a temperature 200°C, and the NOx-conversion performance of at least 80 % at a temperature of about 500°C, at same molar concentrations of an exhaust gas containing nitric monoxide and ammonia used for selective reduction thereof without excess or shortage.

**2.** The catalyst according to claim 1,
wherein the catalyst includes the phosphorus oxide of about 17 to about 33 % by mass,
wherein the molar proportion of silica to alumina is within a range from about 2.0 to about 5.0, and
wherein the atomic proportion of copper to aluminum is within a range from about 0.06 to about 0.09.

**3.** The catalyst according to claim 1 or 2,
 wherein the catalyst after aging by hot water of 800°C has the NOx-conversion performance of at least 90 % at about 200°C with respect to a NOx-conversion performance of the catalyst before hydrothermal aging which is achieved at about 200°C.

**4.** The catalyst according to any one of claims 1 to 3, containing copper oxide of at least about 2.00 % by mass.

**5.** The catalyst according to any one of claims 1 to 4,
 wherein the catalyst is deposited on a honeycomb substrate.

**6.** The catalyst according to any one of claims 1 to 5,
 wherein at least a part of a flow-through substrate is covered with CuCHA, CuAEI or CuAFX applied for reduction of oxide of nitrogen included in a gas flow which passes through the substrate.

**7.** The catalyst according to any one of claims 1 to 5,
 wherein at least a part of a wall-flow substrate is covered with CuCHA, CuAEI or CuAFX applied for reduction of oxide of nitrogen included in a gas flow which passes through the substrate.

**8.** A catalyst product comprising:
a zeolite deposited on a substrate, wherein the zeolite has a crystal structure of CHA, AEI and/or AFX; and
a honeycomb substrate,
wherein the zeolite includes:
   a phosphorus oxide of about 15 to about 35% by mass;
   a molar proportion of silica to alumina from about 1.9 to about 5.2; and
   an atomic proportion of copper to aluminum of about 0.05 to about 0.1.

**9.** A method of producing the catalyst according to any one of claims 1 to 8, comprising:
 exchanging ion-exchange copper by means of copper acetate and/or copper nitrate.
